# EUROPÄISCHE PATENTSCHRIFT

(11) **EP 1 936 337 B1**
(45) Veröffentlichungstag und Bekanntmachung des Hinweises auf die Patenterteilung: **02.06.2010**
(21) Anmeldenummer: 06126907.2
(22) Anmeldetag: 21.12.2006
(51) Int. Cl.: G01J 3/02, G01J 3/50

(54) **Farbmesskopf und damit ausgestattete Abtastvorrichtung**
Colour measuring head fitted with scanning device
Tête manométrique et dispositif de balayage et dispositif de balayage équipé de celle-ci

(43) Veröffentlichungstag der Anmeldung: 25.06.2008
(73) Patentinhaber: X-Rite Europe GmbH, 8105 Regensdorf (CH)
(72) Erfinder: Ehbets, Peter, 8046 Zürich (CH); Kohlbrenner, Adrian, 8800 Thalwil (CH)
(74) Vertreter: Schwabe - Sandmair - Marx

(56) Entgegenhaltungen:
- EP-A- 1 185 077
- EP-A- 1 314 972
- EP-A- 1 694 047
- EP-A- 1 694 048
- EP-A2- 0 847 187
- WO-A-2006/045620
- US-A- 6 008 905
- US-A1- 2006 001 739
- US-A1- 2006 132 777

## Beschreibung

Die Erfindung betrifft eine Abtastvorrichtung mit einem Farbmesskopf gemäss dem Oberbegriff des unabhängigen Anspruchs 1.

In der veröffentlichten internationalen Patentanmeldung WO 2006/045621 A1 ist ein automatisiertes Messsystem zur Qualitätskontrolle und zur Farbregelung einer Druckmaschine in allen Details beschrieben. Es umfasst im Wesentlichen einen Messtisch, auf dem ein auszumessender Druckbogen aufgelegt werden kann, und eine Messeinrichtung, die aus einem balkenförmigen Zeilenscanner und einem Einzel-Farbmesskopf besteht. Der Zeilenscanner und der Einzelmesskopf sind mittels einer rechnergesteuerten Antriebsvorrichtung über den Messtisch verfahrbar, so dass jeder Punkt des auszumessenden Druckbogens selektiv angefahren und ausgemessen werden kann. Aus den dabei gewonnenen Messwerten werden die notwendigen Qualitäts- und Regelparameter für den Druckprozess abgeleitet. Die Ausgabeparameter umfassen in der Regel Farbmesswerte CIE XYZ und abgeleitete farbmetrische Grössen (gemäss CIE Publikation 15 und ISO 13655) sowie Dichtemesswerte gemäss ISO 5. Vorteilhaft ist der Einzelmesskopf als Spektralmesskopf implementiert, so dass aus den gemessenen spektralen Werten des Reflexionsfaktors alle Ausgabeparameter nach bekannter Art berechnet werden können. Der Einzelmesskopf wird in der Regel zur Ausmessung von im Druckbogen enthaltenen Druckkontrollstreifen verwendet, während der Zeilenscanner zur Abtastung des übrigen gedruckten Bildinhalts eingesetzt wird.

Ein solches Messsystem, speziell der Einzel-Farbmesskopf, muss in der Praxis sehr hohen Ansprüchen genügen.

Für die Regelung der Druckmaschinen im Fortdruck muss das Messsystem so schnell wie möglich den Druckkontrollstreifen erfassen und Feedback an die Druckmaschine zurückgeben können. Dies erfordert eine sehr leistungsstarke Messoptik, um mit hoher Abtastgeschwindigkeit über die Messprobe (den auszumessenden Druckbogen) fahren zu können. Ausserdem muss das Messsystem ohne lange Vorwärmzeit und Einschwingverhalten direkt einsatzbereit sein.

Die Messfeldgrösse im Druckkontrollstreifen wird tendenziell immer kleiner, einerseits um Makulatur zu sparen, andererseits um mehr Messfelder im Druckkontrollstreifen anordnen zu können und mehr Druckwerke mit einem Streifen regeln zu können.

Das saubere Ausmessen kleiner Messfelder mit hoher Abtastgeschwindigkeit erfordert eine komplexere Ausgestaltung der Messoptik im Vergleich zum aktuellen Stand der Technik. Parameter wie Abstandsempfindlichkeit und Positioniergenauigkeit des Messkopfes müssen deutlich höhere Anforderungen erfüllen. Ausserdem muss die Homogenität der Messfelder berücksichtigt werden, wenn mit kleinen Messblenden gearbeitet wird.

Die Anforderungen an den Messbereich sind durch die Einführung von hoch pigmentierten Farben, UV getrockneten Farben, der Verwendung von Hochglanzmaterialien und Nachbearbeitung mit Lackschichten gestiegen. Dies erfordert einerseits ein hoch sensitives, rauscharmes Messsystem. Zusätzlich muss das Übersprechen vom Umfeld aktiv unterdrückt werden, um den grossen Messbereich effektiv nutzen zu können.

Im Druckbereich wird mit Druckpuder gearbeitet. Eine Verschmutzung der Messoptik im Verlauf der Zeit kann nicht ausgeschlossen werden. Die Verschmutzung verstärkt die Problematik des hohen Dichtemessbereichs und des Übersprechens zusätzlich.

Die Druckbögen werden im nassen Zustand direkt aus der Druckmaschine gemessen. Der anschliessende Trocknungsprozess verändert die Oberflächenstruktur der Farbschicht und somit die Messwerte. Stabilere Messwerte können in an sich bekannter Weise unter Einsatz von orthogonalen Polarisationsfiltern in Beleuchtungs- und Messkanal erzeugt werden. Diese Messtechnik wird standardgemäss für die Dichtemessung verwendet. Schnelle abtastende spektrale Farbmesssysteme mit Polarisationsfiltertechnik sind noch nicht am Markt erhältlich.

Um schnelle Messzyklen zu erreichen, sind Systemauslegungen wünschenswert, welche Messwerte mit und ohne Polarisationsfilter in einem Messdurchgang erfassen können.

Typische in der Drucktechnik verwendete Substrate (Papiere) beinhalten optische Aufheller, welche im spektralen UV Bereich angeregt werden und fluoreszierendes Licht im sichtbaren Bereich emittieren. Der Fluoreszenzanteil des Substrats beinflusst die Farb- und Dichtemesswerte. Diese Effekte müssen für die Anwendung berücksichtigt werden und erfordern eine stabile Prozessmesstechnik. Zusätzlich ist es wünschenswert, den Anteil von optischen Aufhellern im Papier genauer zu charakterisieren, um einen Abgleich der Messwerte zwischen verschiedenen Messgeräten mit unterschiedlichen Beleuchtungsspektren zu ermöglichen.

Es ist für eine bessere Charakterisierung eines bestimmten Druckprozesses von Interesse, neben den Reflexionsfaktorspektren zusätzliche Parameter zu bestimmen. Diese können zum Beispiel bei Folgeaufträgen eine verbesserte Kontrolle der Reproduktionsqualität ermöglichen oder für die Messung von speziellen Materialien (metallische reflektierende Substrate oder Metallikfarben) verwendet werden. Zusätzliche Parameter beinhalten die Rotationsabhängigkeit des Substrats, den Anteil von optischen Aufhellern im Substrat, die Messung des Transluszenzgrads der Messprobe und eine spektrale oder schmalbandige Glanzmessung.

Das Messsystem wird in einer Produktionsumgebung intensiv genutzt und sollte deshalb möglichst keine Verschleissteile beinhalten. Alle Komponenten, inklusive der Lichtquelle, müssen für maximale Lebensdauer ausgelegt sein.

Da frisch bedruckte Druckproben gemessen werden müssen, ist eine freischwebende Messgeometrie von Wichtigkeit. Die Auslegung des Messsystems muss eine Anpassung der unterschiedlichen Papierdicken sowie die Planaritätsschwankungen der Probenauflage berücksichtigen können.

Die bisher bekannten abtastenden (scannenden) Messsysteme erfüllen die vorstehend erläuterten Anforderungen nicht, nur teilweise oder nur in ungenügendem Masse.

Das Messsystem AxisControl der Firma Heidelberg verwendet einen kompakten spektralen Messkopf mit einem zwei-dimensionalen Antrieb über einer planaren Bogenauflagefläche. Der Messkopf kann nicht freischwebend messen. Der Abstand wird über eine mechanische Auflage des Messkopfs auf der Unterlage kontrolliert. Die Lage des Druckkontrollstreifens auf dem Bogen muss manuell mit einem Lichtzeiger bestimmt werden. Die Messtechnik ist nur für spektrale Messung ohne Polarisationsfilter ausgelegt und benötigt eine Messfeldgrösse von typischerweise 5 mm x 6 mm.

Das Messsystem Intellitrax der Firma X-rite Inc. kombiniert einen spektralen Farbmesskopf mit einem Trackingsensor, der eine automatische Spurfindung und Positionierung gegenüber dem Druckkontrollstreifen ermöglicht. Das optische Messsystem ist mit einem festen Arbeitsabstand zur Probenauflage ausgelegt und muss deshalb den ganzen Bereich verschiedener Papierdicken tolerieren. Bei Anwendung der genormten 45°/0°-Messgeometrie erfordern die Abstandstoleranzen einen entsprechend gross ausgelegten Randabstand zwischen beleuchteter und gesammelter Fläche im Messfeld. Für einen grossen Bereich von Papierdicken von 0 bis über 1 mm limitiert dieser Ansatz die minimale Messfleckgrösse und somit die Anwendung für das Erfassen kleinster Messfelder ohne Übersprechen.

Die spektrale Messdatenerfassung wird mit einem rotierenden Filterrad ausgeführt. Ein komplettes Spektrum benötigt eine zeitlich sequentiell ausgeführte Messung mit jeder Filterposition und entspricht einer kompletten Drehung des Filterrads. Die zeitlich sequentielle Messung mit vielen spektralen Kanälen limitiert die minimal erreichbare Messzeit, was die maximale Abtastgeschwindigkeit und die minimale Messfeldgrösse begrenzt. Ausserdem wird während dem Scanprozess mit den verschiedenen Filterkanälen an örtlich verschiedenen Positionen gemessen. Dieser Versatz kann zum Beispiel bei Rasterfeldern und kleinem Messfleck zu Schwankungen der Messwerte führen. Das Messgerät ermöglicht eine parallele Messung mit und ohne Polarisationsfilter in einem Scandurchgang. Die Probe wird zu diesem Zweck mit polarisiertem Licht beleuchtet und im Filterrad sind Filter mit und ohne Polarisationsfilter angeordnet. Da die Messzeit an die Anzahl Filter geknüpft ist, sind für die Polarisationsfiltermessungen nur 3 Dichtefilter implementiert. Die fehlenden spektralen Stützstellen werden aus diesen 3 Messwerten numerisch approximiert.

Ein drittes Messsystem ist im Dokument DE 195 30 185 C2 beschrieben. Der Messkopf beinhaltet eine Beleuchtung unter 0° mit fest eingebauten Polarisationsfiltern und zwei unterschiedliche Sammelkanäle, nämlich einen spektralen Messkanal ohne Polarisationsfilter und einen Dichtemesskanal mit Polarisationsfilter, welche parallel ausgelesen werden können. Auf der einen Seite führt die Realisierung von zwei spektralen Analysesystemen im Sammelkanal zu Mehrkosten. Auf der anderen Seite fehlt eine komplette spektrale Messung mit Polarisationsfiltern. Die beiden Sammelkanäle tasten das Messfeld unter 45° aus unterschiedlichen Raumrichtungen ab. Proben mit rotationsabhängigen Messeigenschaften werden von beiden Sammelkanälen nicht gleich bewertet. Die Abstandsproblematik wird durch Erzeugung eines Luftkissens zwischen Messkopfunterkante und Papieroberfläche gelöst, auf welchem der Messkopf schwebt. Durch das Luftkissen wird unabhängig von der Papierdicke ein konstanter Arbeitsabstand erreicht.

Das US-Patent US-6,008,905 beschreibt ein Verfahren zur Bestimmung der Erscheinung eines Objektes, das zu replizieren ist, und eine Vorrichtung dafür. Das Verfahren besteht aus dem Bereitstellen einer gesteuerten Belichtung, um eine Fläche des Objektes zu belichten, Ausmessen des Objektes mit einer CCD-Kamera, um eine Bildkarte von einer Vielzahl von Punkten auf der Fläche zu sammeln, und dem Verarbeiten dieser Information, um eine Erscheinungskarte des Objektes zu produzieren.

Die WO 2006/045620 A beschreibt ein Verfahren zur Korrektur von Bildmesswerten. Die EP 1 185 077 A beschreibt ein Verfahren zum Verbessern einer Belichtungsauflösung unter Verwendung multipler Belichtungen. Die US-2006/0001739 A beschreibt ein Verfahren und eine Vorrichtung zur Farbabbildung einer dreidimensionalen Struktur. Die EP 1 694 047 A beschreibt eine Beleuchtungseinrichtung für ein Farbmessgerät. Die US-2006/0132777 A beschreibt Systeme und Verfahren zum Vergrößern des spektralen Bereichs eines LED-Spektralphotometers. Die EP 1 694 048 A beschreibt ein Farbmessgerät und Messverfahren für das Gerät. Die EP 1 314 972 A beschreibt ein Spektralphotometer und die Verwendung desselben. Die EP 0 847 187 A beschreibt eine Abtastvorrichtung zur bildelementweisen fotoelektrischen Ausessung eines Messobjekts.

Durch die vorliegende Erfindung soll nun ein Farbmesskopf und eine mit einem solchen Farbmesskopf ausgestatte Abtastvorrichtung der gattungsgemässen Art dahingehend verbessert werden, dass sie die vorstehend erläuterten, an ein modernes, hochpräzises und schnelles Abtastsystem gestellten Anforderungen erfüllen und dabei insbesondere für die berührungslose Messung auch von kleinsten Messfeldern geeignet sind.

Die Lösung dieser der Erfindung zugrundeliegenden Aufgabe ergibt sich aus den im unabhängigen Anspruch 1 beschriebenen Merkmalen. Besonders vorteilhafte Ausgestaltungen und Weiterbildungen sind Gegenstand der abhängigen Ansprüche.

Im folgenden wird die Erfindung anhand der Zeichnung näher erläutert. Es zeigen:
- Fig. 1: eine vereinfachte Gesamtansicht eines Ausführungsbeispiels der erfin-dungsgemässen Abtastvorrichtung,
- Fig. 2: einen teilweisen Längsschnitt parallel zur Koordinatenebene x-y durch den Messwagen der Abtastvorrichtung,
- Fig. 3: einen teilweisen Querschnitt parallel zur Koordinatenebene x-z durch den Messwagen der Abtastvorrichtung,
- Fig. 4: ein Prinzipblockschema der Mess- und Steuerelektronik der Abtastvor-richtung,
- Fig. 5: eine schematische Darstellung des grundsätzlichen Aufbaus des erfin-dungsgemässen Farbmesskopfs,
- Fig. 6: die optische Auslegung eines Ausführungsbeispiels des Farbmesskopfs,
- Fig. 6a: ein Detail aus Fig. 6,
- Fig. 7-9: schematische Prinzipskizzen von drei weiteren Ausführungsbeispielen des Farbmesskopfs mit mehreren Beleuchtungskanälen,
- Fig. 10: eine Feldblende des Farbmesskopfs,
- Fig. 11: ein Detail eines weiteren Ausführungsbeispiels des Farbmesskopfs mit einem zusätzlichen UV-Beleuchtungskanal,
- Fig. 12: ein Detail eines weiteren Ausführungsbeispiels des Farbmesskopfs mit einem Glanzmesskanal,
- Fig. 13: Messkurven zur Erläuterung der Ermittlung des korrekten Messabstands des Farbmesskopfs über einem Messpunkt,
- Fig. 14: ein Blockschema der Ermittlung des korrekten Messabstands des Farb-messkopfs und
- Fig. 15: ein Blockschema einer aktiven Höhen- bzw. Abstandsregelung für den Farbmesskopf.

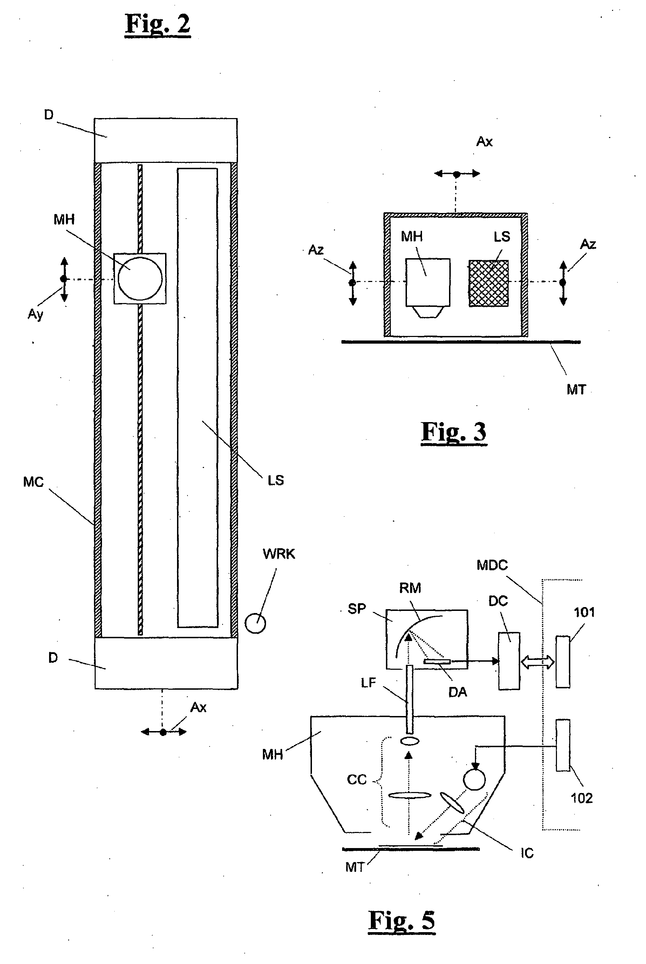

Die erfindungsgemässe Abtastvorrichtung entspricht in ihrem generellen Aufbau den üblichen Messapparaturen, wie sie z.B. in der grafischen Industrie typischerweise zur punktweisen fotoelektrischen Ausmessung von einem Druckprozess entnommenen Druckbögen verwendet werden. Die Abtastvorrichtung umfasst einen Unterbau in Form eines Messtischs MT mit üblicherweise geneigter rechteckiger Oberfläche, auf der das Messobjekt S - der auszumessende Druckbogen - positioniert werden kann. Der Messtisch bildet also eine Auflagefläche für das Messobjekt. Der Druckbogen S enthält typischerweise einige (hier beispielsweise vier) grafische Darstellungen P1-P4 und einen (oder mehrere) Farbmessstreifen CMS. Zur Positionierung des Messobjekts S sind am Messtisch MT nicht dargestellte Anschläge vorgesehen. Die Fixierung des Messobjekts S auf dem Messtisch MT erfolgt vorzugsweise auf elektrostatischem Wege oder mittels bekannter Saugmechanismen. Auf dem Messtisch MT ist ein länglicher Messwagen MC angeordnet, auf bzw. in dem sich eine Messeinrichtung befindet, die einen balkenförmigen Zeilenscanner LS und einen vorzugsweise spektral ausgelegten Einzel-Farbmesskopf MH umfasst (Figuren 2 und 3). Der Messwagen MC erstreckt sich über die Tiefe des Messtischs MT in Koordinatenrichtung y und ist motorisch über dessen Breite in Koordinatenrichtung x linear hin und her beweglich, wobei entsprechende Antriebs- und Steuereinrichtungen am Messwagen MC und am bzw. unter dem Messtisch MT vorgesehen sind. Die Antriebseinrichtung ist in der Zeichnung nur symbolisch durch das Bezugszeichen D angedeutet, die Beweglichkeit des Messwagens MC in x-Richtung durch den Pfeil Ax. Innerhalb des Messwagens MC sind der Zeilenscanner LS und der Farbmesskopf MH unabhängig von einander mittels nicht dargestellter konventioneller Antriebseinrichtungen in Richtung der Koordinatenachse z relativ zur Messtischoberfläche heb- und senkbar, was in Fig. 3 durch die Pfeile Az symbolisiert ist. Der Farbmesskopf MH ist ausserdem noch in Richtung der Koordinatenachse y verfahrbar. Diese Bewegungsmöglichkeit ist in der Figur 2 durch den Pfeil Ay symbolisiert. In Verbindung mit der Bewegung des Messwagens MC in x-Richtung und der Verfahrbarkeit in y- und z-Richtung kann der Farbmesskopf MH über jedem beliebigen Bildelement des Messobjekts positioniert werden.

Der Zeilenscanner LS kann jeweils eine komplette Bildpunktzeile des Messobjekts S ausmessen und dient typischerweise zur Erfassung des Bildinhalts des Messobjekts. Der Einzel-Farbmesskopf MH wird zur hochpräzisen Ausmessung von ausgewählten Bildpunkten des Messobjekts und insbesondere der Messfelder von Farbmessstreifen (Druckkontrollstreifen) eingesetzt. Der Zeilenscanner ist in WO 2006/045621 A1 in allen Einzelheiten beschrieben und nicht Gegenstand der vorliegenden Erfindung.

Auf dem Messtisch MT befindet sich parallel zum Messwagen MC ein Weissreferenzstreifen WR. Ferner ist auf dem Messtisch in Randnähe, aber noch im Erfassungsbereich des Farbmesskopfs MH eine langzeitstabile Weissreferenzkachel WRK angeordnet. Diese beiden Weissreferenzen dienen der Kalibrierung der Messeinrichtung, worauf weiter unten noch näher eingegangen wird.

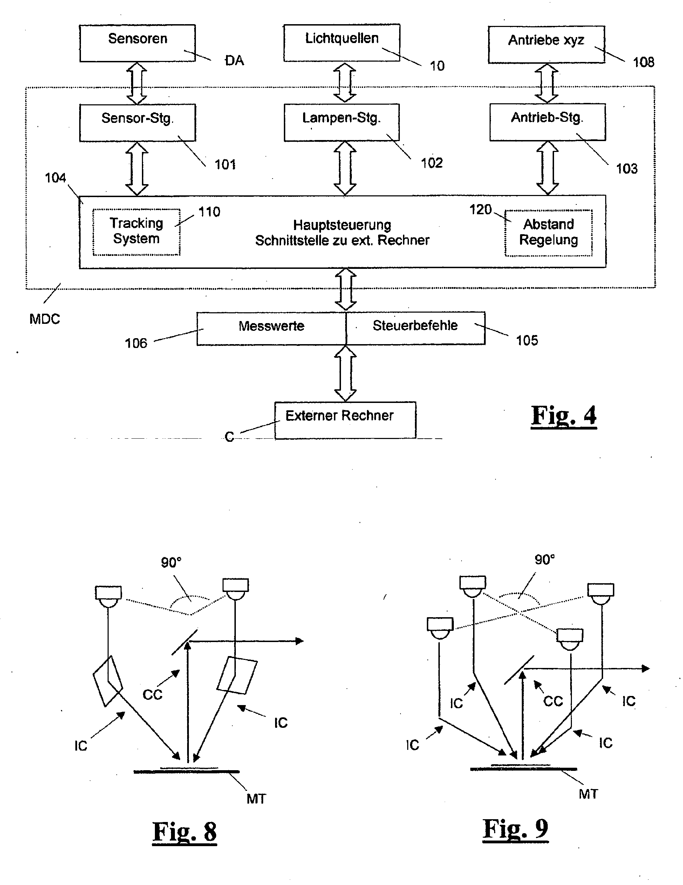

Die Abtastvorrichtung umfasst ferner noch eine Verarbeitungseinrichtung in Form eines externen Rechners C mit einer Tastatur K und einem Farbmonitor M. Der Rechner C arbeitet mit einer Mess- und Antriebssteuerung MDC (Fig. 4) am Messtisch MT bzw. im Messwagen MC zusammen und verarbeitet die vom im Messwagen MC befindlichen Zeilenscanner LC und Farbmesskopf MH erzeugten und ihm über die Mess- und Antriebssteuerung MDC zugeführten Messsignale, wobei er unter anderem auch die Bildinformation des abgetasteten Messobjekt S auf dem Monitor M darstellen kann. Der Rechner C kann über die Mess- und Antriebssteuerung MDC ferner auch die Bewegungen des Messwagens MC und des darin befindlichen Zeilenscanners LS und Farbmesskopfs MH in die drei Koordinatenrichtungen x, y und z veranlassen und steuern.

In der Fig. 4 ist die Mess- und Antriebssteuerung MDC der Abtastvorrichtung in Form eines groben Blockschemas dargestellt. Sie umfasst eine Sensorsteuerung 101, eine Lampensteuerung 102 und eine Antriebssteuerung 103 sowie eine Hauptsteuerung 104, die mit den anderen drei Steuerungen zusammenarbeitet und gleichzeitig auch die Verbindung zum externen Rechner C herstellt. Die Sensorsteuerung 101 liest die Messwerte aus dem Zeilenscanner LS und Farbmesskopf MH aus, die Lampensteuerung 102 steuert die Lichtquellen von Zeilenscanner LS und Farbmesskopf MH, und die Antriebssteuerung 103 steuert Antriebsmotoren 108 für die Bewegung des Messwagens MC und des darin befindlichen Farbmesskopfs MH in die drei Bewegungsrichtungen x, y, und z. Die Hauptsteuerung 104 koordiniert und kontrolliert die drei übrigen Steuerungen auf einer übergeordneten Ebene und stellt gleichzeitig auch die Verbindung zum externen Rechner C her. Die Hauptsteuerung 104 nimmt vom externen Rechner C Steuerbefehle 105 entgegen und sendet dem externen Rechner die vom Zeilenscanner LS und dem Farbmesskopf MH erzeugten (digital aufbereiteten) Messwerte 106. Die Mess- und Antriebssteuerung MDC ist funktionell im Prinzip gleich wie bei den kommerziell erhältlichen Abtastgeräten dieser Art, wobei sich die für die Ansteuerung der fotoelektrischen Wandler und Lichtquellen von Zeilenscanner LS und Farbmesskopf MH erforderlichen spezifischen Funktionen unmittelbar aus den Datenblättern der Hersteller dieser Elemente ergeben. Der Fachmann bedarf daher für die Implementierung der Mess- und Antriebssteuerung MDC keiner näheren Erläuterung.

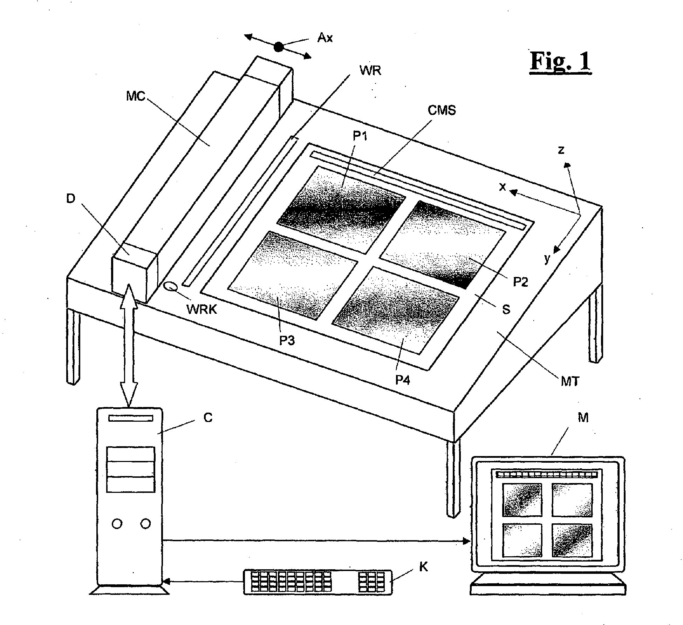

Die in den Figuren 1-4 dargestellte Abtastvorrichtung entspricht soweit dem bekannten Stand der Technik, wie er z.B. in der eingangs erwähnten WO 2006/045621 A1 detailliert beschrieben ist. Der mechanische Aufbau und die Realisierung der motorischen Verfahrbarkeit von Messwagen MC und Zeilenscanner bzw. Farbmesskopf sind in der US-A 6,028,682 detailliert beschrieben, so dass der Fachmann diesbezüglich keiner weiteren Erläuterung bedarf. Es versteht sich, dass der Messwagen MC auch parallel zur Koordinatenrichtung x angeordnet sein kann, wobei dann alle anderen Ausrichtungen und Bewegungsrichtungen sinngemäss ebenfalls um 90° gedreht wären.

In der Hauptsteuerung 104 sind ferner noch ein Tracking System (Spurlagekontrolle für den Farbmesskopf) und eine aktive Abstandsregelung für die Höhenregelung des Farbmesskopfs enthalten und durch die beiden Blöcke 110 und 120 symbolisiert. Darauf wird weiter unten noch näher eingegangen.

Die vorliegende Erfindung befasst sich primär mit der Ausbildung des Einzel-Farbmesskopfs MH und den damit zusammenhängenden Aspekten. Die Erfindung umfasst daher auch Abtastvorrichtungen, die entweder nur mit einem Einzel-Farbmesskopf MH ausgestattet sind oder anstelle eines Zeilenscanners eine andere Bildabtasteinrichtung aufweisen. Die Erfindung umfasst ferner auch einfachere Abtastvorrichtungen, bei denen der Farbmesskopf nur eindimensional verfahrbar ist. Solche Abtastvorrichtungen erfordern dann aber einen präzisisen mechanischen Anschlag für die Druckbogenkanten oder eine genaue manuelle Positionierung des Bogens durch den Drucker. Ferner befasst sich die Erfindung auch mit einigen speziellen Aspekten der Abtastvorrichtung, welche für hochpräzise Messungen von Bedeutung sind.

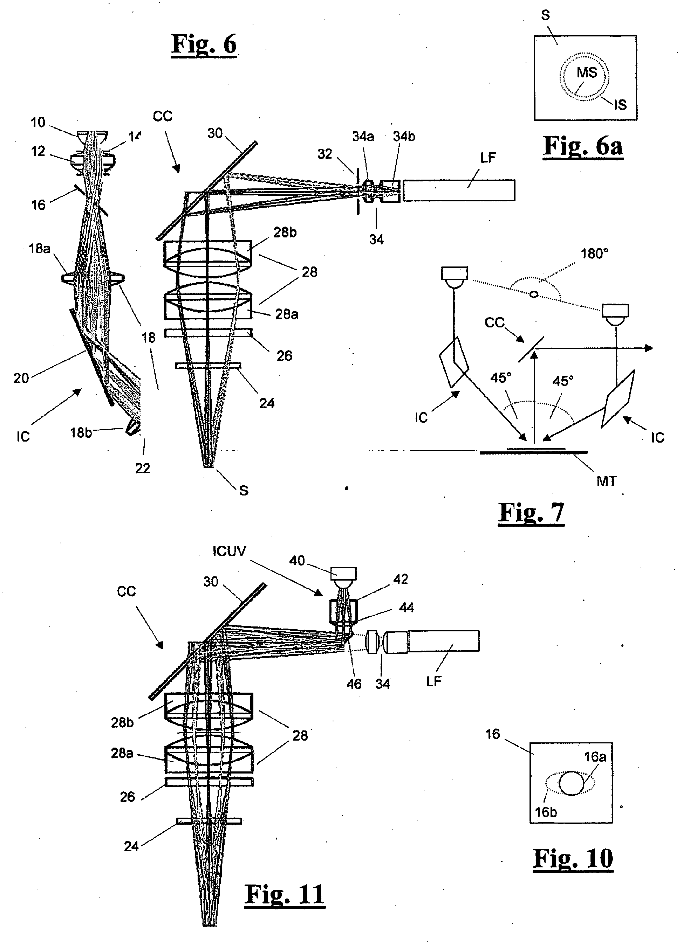

Die Fig. 5 zeigt schematisch den grundsätzlichen Aufbau des Einzel-Farbmesskopfs MH. Er umfasst einen Beleuchtungskanal IC, einen Sammel- oder Messkanal CC, einen Lichtleiter (optische Faser oder Lichtleiterstab) LF und einen wellenlängenselektiven lichtelektrischen Wandler, der hier als ein Spektrometer SP mit einem konkaven Beugungsgitter RM und einem Detektor-Array DA (z.B. ein Dioden-ZeilenDetektor) und einer Ausleseelektronik DC für das Detektor-Array DA ausgebildet ist. Der Beleuchtungskanal IC beleuchtet das auf dem Messtisch MT befindliche Messobjekt in einem Beleuchtungsfleck unter einem (genormten) mittleren Einfallswinkel von 45° (bezogen auf die Normale auf das Messobjekt am Messort), der Sammelkanal CC fängt das von einem innerhalb des Beleuchtungsflecks liegenden Messfleck auf dem Messobjekt ausgehende Messlicht unter einem (genormten) Auffangwinkelbereich von 0° +/- 5-10° (bezogen auf die Normale auf das Messobjekt am Messort) auf und koppelt es über eine Einkoppeloptik (Fig. 6) in den Lichtleiter LF ein. Der Lichtleiter LF leitet das Messlicht in den Eintrittsspalt des Spektrometers SP. Das Messlicht wird im Spektrometer SP durch das konkave Beugungsgitter RM spektral aufgespalten. Die einzelnen Spektralanteile des Messlichts gelangen örtlich aufgelöst auf das Detektor-Array DA und werden dort in entsprechende elektrische Signale umgewandelt. Die Ausleseelektronik DC liest das Detektor-Array DA aus und leitet die spektralen Messsignale an die Sensorsteuerung 101 in der Mess- und Antriebssteuerung MDC weiter. Die nicht bezeichnete Lichtquelle im Beleuchtungskanal IC wird von der Lampensteuerung 102 in der Mess- und Antriebssteuerung MDC angesteuert.

Für minimale Messzeiten und maximale Abtast- (Scan-)Geschwindigkeit ist der Einsatz eines Spektrometers von Vorteil, welches eine simultane Messung der spektralen Verteilung ermöglicht. Das Spektrometer kann, wie dargestellt, als Gitter-Spektrometer mit Diodenzeilen-Detektor ausgebildet sein, welches die spektrale Verteilung in einer Beugungsordnung des Gitters mit einem Zeilen- oder Matrixdetektor ermöglicht. Alternativ kann das Spektrometer auch mit einem Detektor-Array mit einer Anzahl von schmalbandigen Bandpassfiltern ausgestattet sein, welche nebeneinander vor dem Detektor-Array angeordnet sind. Das Beugungsgitter entfällt dann natürlich.

In dieser Allgemeinheit entspricht der Farbmesskopf MH vollumfänglich bekannten Messköpfen dieser Art, so dass der Fachmann so weit keiner weiteren Erläuterung bedarf.

Im Folgenden wird die spezifische Auslegung verschiedener Ausführungsbeispiele des erfindungsgemässen Farbmesskopfs MH anhand der Figuren 6-11 genauer beschrieben. Die Hauptziele sind dabei die Realisierung einer lichtstarken, empfindlichen Messoptik, damit schnelle Messzyklen erreicht werden können, und eines kleinen Messflecks, um Übersprechen aus der Umgebung insbesondere bei sehr kleinen Messfeldern zu verhindern.

Die Fig. 6 zeigt das einfachste Ausführungsbeispiel des Farbmesskopfs MH mit einem einzigen Beleuchtungskanal IC. Dieser besteht aus einer Lichtquelle 10 und verschiedenen optischen Mitteln, welche eine Kollimationsoptik 12, Apodisierungsmittel in Form einer Apodisierungsmaske 14, eine Feldblende 16, eine aus zwei gleichen Linsensystemen 18a und 18b bestehende, symmetrische telezentrische Abbildungsoptik 18, einen Umlenkspiegel 20 und einen Polarisationsfilter 22 umfassen.

Der Sammelkanal CC des Farbmesskopfs MH umfasst optische Mittel in Form eines Schutzfensters 24, eines Polarisationsfilters 26, einer aus zwei symmetrischen Achromaten 28a und 28b bestehenden Abbildungsoptik 28, eines Umlenkspiegels 30, einer Feldblende 32 und der schon erwähnten Einkoppeloptik 34 in Form von zwei gleichen Linsen 34a und 34b.

Die telezentrische Abbildungsoptik 18 bildet die Feldblende 16 scharf in die Messebene ab. Der Beleuchtungskanal IC erzeugt dadurch auf dem auszumessenden Messobjekt S einen Beleuchtungsfleck IS (Fig. 6a), der im Wesentlichen durch die Gestalt und Grösse der Feldblende 16 im Beleuchtungskanal IC bestimmt ist. Analog bildet die Abbildungsoptik 28 die Feldblende 32 in die Messebene ab. Der Sammel- bzw. Messkanal CC sammelt daher nur das Messlicht aus einem durch das Abbild der Feldblende 32 gegebenen Sammel- bzw. Messfleck MS innerhalb des Beleuchtungsflecks IS (Fig. 6a), wobei die Grösse des Sammelflecks MS durch die Form und Grösse der Feldblende 32 im Sammelkanal CC bestimmt ist.

Die Grössen des Beleuchtungsflecks und des Sammel- bzw. Messflecks sind durch geeignete Bemessung der Feldblenden 16 und 32 so gewählt, dass im abtastenden (scannenden) Messmodus der Abtastvorrichtung im Minimum eine Messung, besser zwei Messungen sich komplett mit Beleuchtung und Sammlung über dem auszumessenden Messfeld befinden. Dadurch wird das räumliche Übersprechen aus der Umgebung eliminiert und auch kleinste Messfelder mit hohen Dichten können korrekt bewertet werden.

Ein lichtstarkes System wird erreicht, wenn das Spektrometer voll ausgeleuchtet ist. Das heisst, dass in dieser Anordnung der Messfleck auf dem Messobjekt von der Beleuchtung überleuchtet wird. Da das System vorzugsweise mit mehreren Beleuchtungskanälen ausgelegt ausgestattet ist (Figuren 7-9), ist in an sich bekannter Weise der Sammelkanal unter 0° realisiert und der Beleuchtungskanal unter 45°.

Damit der Farbmesskopf MH freischwebend über dem Messobjekt messen kann, muss er auch über einen gewissen Toleranzbereich abstandsunabhängig sein. Wenn sich der Messabstand ändert, verschiebt sich zusätzlich zur Defokusierung der Beleuchtungsfleck lateral gegenüber dem Messkanal bzw. dem Messfleck. Ein konstanter Signalpegel erfordert deshalb, dass der Beleuchtungsfleck das Messobjekt homogen mit telezentrischem Strahlengang ausleuchtet, so dass jeder Punkt in der Messebene innerhalb der Abstandstoleranzen die Lichtquelle mit einem konstanten Öffnungswinkel sieht. Diese Anordnung ermöglicht auch eine gleichförmige winkelmässige Bewertung über die Messprobenfläche.

Die Lichtquelle 10 emittiert ein weisses, über den spektralen Bereich von 400 bis 700 nm kontinuierliches Spektrum. Bevorzugt werden als Lichtquelle weisse LEDs eingesetzt. Aber auch andere gebräuchliche Lichtquellen, wie zum Beispiel Glühlampen, können ebenfalls verwendet werden. Als LED-Lichtquelle können einzelne highpower LEDs oder eine Vielzahl von kleinen low-power LED Chips verwendet werden, welche mit Chip-on-Board Technologie in kompakter Bauform auf einem gemeinsamen Substrat angeordnet sind.

Das Licht aus der Lichtquelle 10 wird mit der Kollimationsoptik 12 kollimiert, so dass im Bereich der Feldblende 16 ein achsenparalleler Strahlengang erzeugt wird. Die Kollimationsoptik 12 ist im gezeigten Ausführungsbeispiel mit einer asphärischen Linse realisiert. Alternativ kann sie zum Beispiel auch durch einen Lichtleiterstab mit Querschnittswandler realisiert sein. Die Ausleuchtung im Bereich der Feldblende ist relativ homogen und wird durch einen typischen Randabfall (cos^4 Abfall) begrenzt. Eine verbesserte homogene Ausleuchtung wird erzielt, wenn im Strahlengang zwischen LED und Kollimationsoptik die Apodisierungsmaske 14 eingesetzt ist. Diese Maske schwächt den zentralen Signalpegel relativ zu den Randbereichen ab, so dass eine konstante Ausleuchtung erreicht wird. Die Apodisierungsmaske 14 kann mittels eines nicht transparenten kleinen Punkts realisiert werden, welcher auf der optischen Achse angeordnet ist. Idealerweise ist der Punkt direkt auf einer optischen Fläche der Kollimationsoptik 12 aufgebracht. Er kann aber auch auf einem zusätzlichen transparenten Substrat realisiert werden, so wie dies in Fig. 6 dargestellt ist.

Da der Farbmesskopf für Druckkontroll-Anwendungen bestimmt ist und daher auch gerasterte Proben zu messen im Stande sein muss, weist die Öffnung der Feldblende 16 vorzugsweise eine runde Kontur auf. Wie die Fig. 10 zeigt, kann die Blendenöffnung 16a kreisrund sein. Alternativ kann die Blendenöffnung 16b auch eine elliptische Gestalt aufweisen.

Die Feldblende 16 ist im telezentrischen Strahlengang nach der Kollimationsoptik 12 angeordnet. Die Ebene der Feldblende 16 ist um 45° gegenüber der optischen Achse verkippt, so dass die scharfe Bildebene bei der gewählten 45° Beleuchtungsgeometrie in die Messebene fällt. Die Abbildung der Feldblende 16 in die Bildebene ist mit einer symmetrischen Optik mit zwei gleichen Linsensystemen realisiert, welches den telezentrischen Strahlengang in der Blendenebene erhält und die Bildebene abbildet. Der um 45° geneigte Umlenkspiegel 20 ist zwischen den beiden symmetrischen Linsensystemen 18a und 18b der Abbildungsoptik 18 eingefügt. Er erzeugt den 45° Beleuchtungswinkel im Messfeld und ermöglicht eine kompaktere Bauform des Farbmesskopfs MH.

Bevorzugt ist die Abbildungsoptik 18 durch Asphären realisiert. Die Linsen der Abbildungsoptik 18 und der Kollimationsoptik 12 können kostengünstig als spritzgegossene Kunststofflinsen hergestellt werden.

Im messobjektseitigen Strahlengang am Ausgang des Beleuchtungskanals IC ist der lineare Polarisationsfilter 22 fest eingebaut. Der entsprechende Polarisationsfilter 26 im Sammelkanal CC ist schaltbar ausgebildet, damit der Farbmesskopf MH sowohl im Modus mit als auch im Modus ohne Polarisationsfilter zu arbeiten im Stande ist. Unter schaltbar wird dabei verstanden, dass der Polarisationsfilter 26 aus dem Strahlengang des Sammelkanals CC entfernt bzw. in diesen eingefügt werden kann, was in der Fig. 6 durch einen Pfeil 26a symbolisiert ist. Alternativ kann diese Schaltfunktion aber auch durch elektrisch schaltbare Polarisatoren, zum Beispiel basierend aus Liquid Crystal Material, realisiert sein.

Damit der Farbmesskopf mit dem im Beleuchtungskanal IC fest eingebauten Polarisationsfilter 22 bei ausgeschaltetem (entfernten) Polarisationsfilter 26 im Sammelkanal CC gleich misst wie eine Anordnung komplett ohne Polarisationsfilter, ist die Polarisationsachse des Polarisationsfilters 22 um 45° verkippt gegenüber der Einfallsebene auf das Messobjekt ausgerichtet.

Der Sammelkanal CC im Farbmesskopf MH muss das Messobjekt freischwebend messen. Damit ein minimales Sichtfeld erreicht wird, bildet der Sammelkanal die Feldblende 32 scharf in die Messebene ab. In der Figur 6 wird die Abbildung mit zwei symmetrischen Achromaten realisiert. Die Bauhöhe des Sammelkanals CC und damit des gesamten Farbmesskopfs MH ist durch den Umlenkspiegel 30, welcher das Strahlenbündel des Messlichts um 90° umlenkt, reduziert. Nach der Feldblende 32 wird das Strahlenbündel mit der Einkoppeloptik 34 in das Spektrometer SP eingekoppelt. Die Einkoppeloptik 34 passt die numerische Apertur an das Spektrometer SP an und erzeugt eine homogene Ausleuchtung über die Eintrittsfläche des Lichtleiters LF. Sie ist, wie in der Figur 6 dargestellt, mit zwei Einzellinsen 34a und 34b realisiert, so dass ein telezentrischer Strahlengang auf der Lichtleiterseite erzeugt wird.

Das vom Sammelkanal CC erfasste Messlicht wird mit dem Lichtleiter LF (optische Faser oder Lichtleiterstab) vom Sammelkanal CC zum Spektrometer SP geleitet. Um den Kopplungswirkungsgrad zum Spektrometer zu erhöhen, ist es vorteilhaft, den optischen Lichtleiter LF als Faserbündel mit einem Querschnittswandler zu realisieren. In diesem Fall ist die Austrittsfläche des Lichtleiterbündels an die üblicherweise rechteckige Geometrie des Eintrittsspalts des Spektrometers SP angepasst.

Durch Verschmutzung kann die Leistung des Farbmesskopfs reduziert werden. Druckpuder oder Staub, welcher sich an den optischen Flächen ablagert, erzeugt Streulicht, welches die Dichtemessung auf den kleinen Messfeldern beeinflusst. Besonders kritisch ist der Sammelkanal CC, da dieser das Sichtfeld der Messoptik bestimmt. Um Verschmutzungseffekte zu verhindern, ist als erstes optisches Element im Sammelkanal CC das Schutzfenster 24 eingebaut. Dieses Schutzfenster ist vorzugsweise so im Gehäuse des Farbmesskopfs MH befestigt, dass der Anwender es einfach in die Aussenfläche des Messkopfes ein- und ausschieben kann. Im Falle von Verschmutzung kann der Anwender somit regelmässig das Schutzfenster 24 durch ein neues, sauberes Schutzfenster ersetzen. Ein teurer Serviceeinsatz für die Messkopfreinigung ist damit nicht erforderlich.

Das in Fig. 6 dargestellte Ausführungsbeispiel des Farbmesskopfs MH umfasst nur einen einzigen Beleuchtungskanal IC. Vorzugsweise ist der Farbmesskopf jedoch mit zwei oder vier oder ev. sogar noch weiteren Beleuchtungskanälen ausgestattet, wodurch die Messleistung und der Einsatzbereich des Farbmesskopfs beträchtlich erhöht werden.

Beim Ausführungsbeispiel der Fig. 7 sind zwei Beleuchtungskanäle IC vorgesehen, die sich bezüglich des Sammelkanals CC diametral (Winkelabstand 180°) gegenüberliegen, so dass das Messobjekt von zwei gegenüberliegenden Seiten beleuchtet wird.

Beim Ausführungsbeispiel der Fig. 8 sind ebenfalls zwei Beleuchtungskanäle IC vorgesehen, welche jedoch um einen Winkelabstand von 90° zu einander versetzt sind, so dass das Messobjekt mit Licht aus zwei zu einander senkrechten Raumrichtungen beaufschlagt wird. In dieser Konfiguration können rotationsabhängige Abstrahleffekte der Messproben vernünftig gemittelt werden.

Beim Ausführungsbeispiel der Fig. 9 schliesslich sind vier Beleuchtungskanäle IC vorgesehen, die im Winkelabstand von je 90° rund um den Sammelkanal CC angeordnet sind. Dieses Ausführungsbeispiel des Messkopfs MH lässt die grösste Flexibilität zu, wie im Folgenden noch ausgeführt wird. Bei den Ausführungsbeispielen der Figuren 7-9 sind alle Beleuchtungskanäle jeweils substantiell gleich ausgebildet wie der Beleuchtungskanal IC im Ausführungsbeispiel der Fig. 6.

Die besonders bevorzugte 4-Kanal-Ausbildung gemäss der Fig. 9 ermöglicht in den beiden orhtogonalen Achsen zusätzlich eine beidseitige Beleuchtung, was die Robustheit gegenüber Winkelverkippungen der Probenoberfläche zum Farbmesskopf erhöht und rotationsabhängige Abstrahleffekte weiter reduziert.

Die vier Beleuchtungskanäle können einzeln angesteuert werden. Dies ermöglicht eine Messung für jede Winkelrichtung und eine Charakterisierung des winkelabhängigen Streuverhaltens der Messprobe.

Jeder der zwei bzw. vier Beleuchtungskanäle IC bildet eine Feldblende 16 in die Messfeldebene ab, so dass die zwei bzw. vier Blendenbilder sich perfekt in der Bildebene überlagern. Damit wird für die freischwebender Anordnung ein räumlich scharf begrenzter Beleuchtungsfleck in der Messfeldebene erzeugt. Die Blendenbilder der verschiedenen Beleuchtungskanäle werden durch Justage der Komponenten, im speziellen der Feldblenden, in der Messfeldebene im Sollabstand in Deckung gebracht.

Die Form des Beleuchtungs- und des Sammelflecks wird, wie schon erwähnt, durch die entsprechenden Feldblenden in den Messkanälen bestimmt. Die Form kann so flexibel an das Format der Messfelder angepasst werden. Bei asymmetrischen Messfeldern, welche eine grössere Höhe als Breite in Richtung des Druckkontrollstreifens aufweisen, ist es sinnvoll, eine ähnliche Asymmetrie für die Form des Messflecks zu wählen. Dies ermöglicht Flexibilität für die Anwendung. Der Farbmesskopf kann so nur durch den Einbau unterschiedlicher Blendensets für verschiedene Anwendungen genutzt werden.

Der Farbmesskopf kann in den verschiedenen Beleuchtungskanälen auch unterschiedliche Blendengrössen aufweisen. Der Farbmesskopf hat dann die Möglichkeit, die Messungen mit unterschiedlichen Randabständen zwischen Beleuchtungsfleck und Sammelfleck auszuführen, indem mit den entsprechenden Beleuchtungskanälen einzeln gemessen wird. Die Messung mit unterschiedlichen Randabständen ermöglicht die Bestimmung der Transluszenzeigenschaften der Messprobe. Diese Möglichkeit kann im Druckprozess die Qualität des verwendeten Materials für Nachfolgeaufträge mit gleichen Eigenschaften festlegen.

In den einzelnen Beleuchtungskanälen können verschiedene LEDs mit unterschiedlichen Beleuchtungsspektren eingesetzt werden. Die Spektren können so gewählt werden, dass zum Beispiel in den spektralen Randbereichen ein besserer Signalpegel entsteht. Zum Beispiel können weisse LEDs mit schmalbandigen blauen LEDs ergänzt werden. Eine Alternative ist die Wahl von weissen LEDs mit unterschiedlichen Pumpwellenlängen im kurzwelligen Bereich, so dass ein kombinertes Spektrum mit besseren Eigenschaften für die Messtechnik entsteht. Die Lichtquellen sind vorteilhaft alle in einer Ebene angeordnet, so dass sie auf einem gemeinsamen Träger aufgebaut werden können.

Bei den bisher beschriebenen Ausführungsbeispielen des Farbmesskopfs müssen Messungen mit und ohne Polarisationsfilter in zwei getrennten Messdurchläufen (z.B.

Hinlauf und Rücklauf) erfolgen (einmal mit und einmal ohne eingeschalteten Polarisationsfilter im Sammelkanal CC). Die Messwerte werden dabei kontinuierlich ausgewertet, so dass ohne Zeitverzögerung Regelempfehlungen an die Druckmaschine weitergegeben werden können.

Mit dem Ausführungsbeispiel des Farbmesskopf MH gemäss Fig. 9 kann mit einer geringfügigen Modifikation die Messung mit und ohne Polarisationsfilter in nur einer einzigen Abtastbewegung durchgeführt werden. Für diesen Fall ist der Polarisationsfilter 26 fest im Sammelkanal CC eingebaut. Zwei um 90° gegen einander versetzt angeordnete Beleuchtungskanäle IC haben den Polarisationsfilter 22 fest eingebaut. Die beiden anderen, ebenfalls um 90° gegeneinander versetzten Beleuchtungskanäle IC sind ohne Polarisationsfilter realisiert. Die Lichtquellen 10 sind LEDs, welche sehr schnell moduliert werden können. Beim Messvorgang wird jeweils sehr schnell hintereinander je eine Messung mit den beiden Beleuchtungskanälen mit und dann mit den beiden Beleuchtungskanälen ohne Polarisationsfilter ausgelöst. Die Blendengrössen (und damit Beleuchtungs- und Messfleckgrössen) und die Fahrgeschwindigkeit des Farbmesskopfs werden so gewählt, dass auf ein und demselben Messfeld je eine komplette Messung mit und ohne Polarisationsfilter durchgeführt werden kann. Da die beiden Messungen mit dem gleichen Sammelkanal durchgeführt werden, wird mit und ohne Polarisationsfilter ein komplettes Spektrum erfasst.

Die Verwendung von Kunststofflinsen in den Beleuchtungskanälen und der Einsatz von fest eingebauten Polarisationsfiltern schwächen den UV-Anteil in der Beleuchtung ab. Es ist daher zweckmässig, die Beleuchtung als UV-cut Filter zu definieren und einen allfälligen UV-Anteil mit zusätzlichen Filtern definiert zu eliminieren. Diese Ausbildungsvariante eignet sich gut für die Prozesskontrolle. Optische Aufheller im Substrat (Messobjekt, Druckbogen), welche im UV-Bereich angeregt werden, können aber damit nicht detektiert werden.

Für diesen Zweck kann gemäss einem weiteren Ausführungsbeispiel des Farbmesskopfs MH ein zusätzlicher UV-Beleuchtungskanal ICUV mit einer UV-LED 40 als Lichtquelle vorgesehen sein. Die UV-LED 40 ist auf dem gleichen Träger wie die Lichtquellen 10 (weissen LEDs) der übrigen Beleuchtungskanäle IC befestigt. Das Licht der UV-LED 40 wird mit einer Kondensorlinse 44 erfasst und eine Blende 42 ausgeleuchtet. Ein dichroider Filter 46, welches das UV-Licht reflektiert und transparent für das Licht im Bereich 400 nm bis 700 nm ist, spiegelt das UV-Licht in den Strahlengang der Abbildungsoptik 28 im Sammelkanal CC ein. Die Abbildungsoptik 28 bildet dann die Blende 44 in die Messebene ab. Die Abbildungsachromate 28a und 28b müssen für dieses Ausführungsbeispiel aus UV-transparenten Materialien (Gläsern) gefertigt werden. Die Integration des UV-Beleuchtungskanals ICUV in den Sammelkanal CC spart Kosten und erleichtert die Justage. Die Abstandsunabhängigkeit ist wegen des 0° Beleuchtungswinkels gewährleistet.

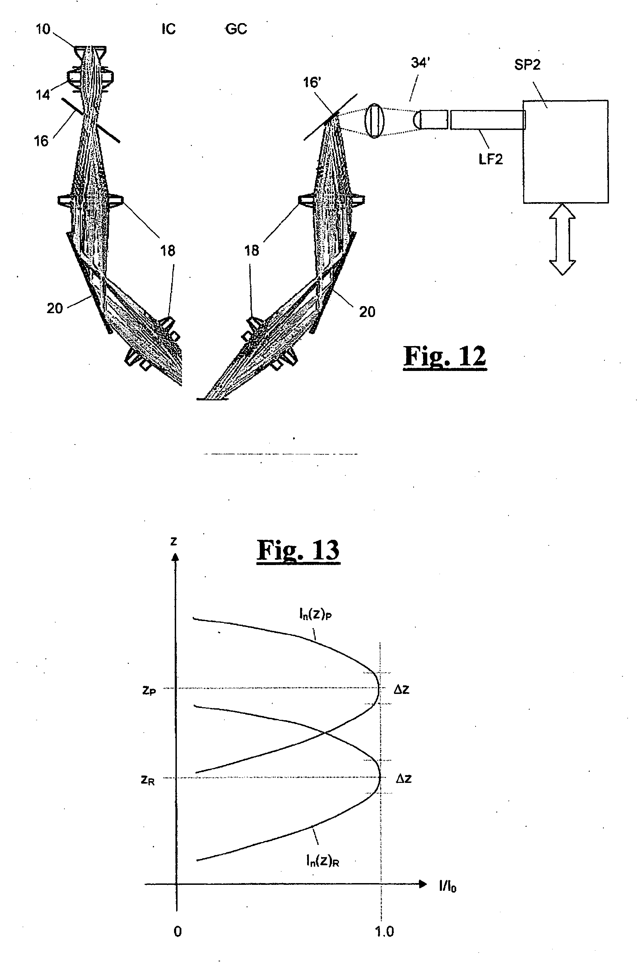

Beim Ausführungsbeispiel der Figuren 12 und 13 ist im Farbmesskopf MH zusätzlich noch ein Glanzmesskanal GC unter 45° vorhanden. Zu diesem Zweck ist einer der zwei (oder vier) Beleuchtungskanäle IC etwas umgestaltet. Die Beleuchtung des Messobjekts unter 45° wird von dem dem Glanzmesskanal GC diametral gegenüberliegenden Beleuchtungskanal IC erzeugt. Der Glanzmesskanal GC erfasst das vom Messobjekt unter 45° reflektierte Licht und weist mit Ausnahme der Lichtquelle 10 und der Kollimationsoptik 12 dieselben optischen Komponenten wie der Beleuchtungskanal IC auf. Die Abbildungsoptik 18 bildet das Messlicht in die Ebene der hier als Umlenkspiegel ausgebildeten Feldblende 16' ab. Die Blendengrösse ist kleiner als die der Feldblenden in den übrigen Beleuchtungskanälen IC gestaltet. Die Feldblende 16' ist im optischen aktiven Teil als Spiegel ausgelegt, welcher den Strahlengang umlenkt. Nach der Feldblende 16' ist eine Einkoppeloptik 34' ähnlich der im Sammelkanal CC angeordnet, welche das Messlicht in einen Lichtleiter LF2 einkoppelt und einem zusätzlichen Spektrometer SP2 zuführt. Bei diesem Ausführungsbeispiel bietet der Farbmesskopf zwei spektrale Messkanäle für eine diffuse und eine gerichtete Messgeometrie. Die gerichtete Glanzmessgeometeie ermöglicht die Messung von metallisch glänzenden Proben, welche mit der diffusen 45°/0°-Geometrie nicht richtig bewertet werden.

Die erfindungsgemässe Abtastvorrichtung muss für ihre Funktion eine absolute Weissmessung ausführen. Bei den bekannten Abtastvorrichtungen dieser Art wird für die absolute Weissmessung eine an einem Punkt auf dem Messtisch angeordnete kalibrierte Weissreferenz regelmässig angefahren und gemessen. Bei der erfindungsgemässen Abtastvorrichtung werden zwei unterschiedliche Weissreferenzen eingesetzt, und zwar die konventionelle, langzeitstabile Weissreferenzkachel WRK, welche vor dem Einbau extern absolut kalibriert und an einem möglichst vor Verschmutzung geschützten Ort in der Abtastvorrichtung angeordnet ist (Fig. 2), und der Weissreferenzstreifen WR, welcher an einer Seite des Messtischs MT über die ganze Seitenlänge angebracht ist (Fig. 1). Für diesen Streifen muss nicht langzeitstabiles Material verwendet werden. Die Referenzwerte für das absolute Weiss über die gesamte Länge des Weissreferenzstreifens WR können durch eine Transfermessung mit dem Farbmesskopf MH von der Weissreferenzkachel WRK abgeleitet werden.

Bei der Transfermessung führt der Farbmesskopf zuerst eine Weisskalibration auf der Weissreferenzkachel WRK aus. Dies entspricht einer Messung im Sollabstand. Den spektralen Messwerten werden die (im System abgespeicherten) spektralen Kalibrationswerte der Weissreferenzkachel WRK zugeordnet. Danach misst der Farbmesskopf im Sollabstand den Weissreferenzstreifen WR an einer Vielzahl von Positionen über die gesamte Länge verteilt aus. Aus diesen Messwerten wird durch Interpolation an jeder beliebigen Position ein entsprechendes Weissspektrum berechnet, welches vom Farbmesskopf bei nachfolgenden Weissabgleichen an dieser Position verwendet wird.

Ein alternativer Ablauf ist wie folgt möglich: Beim Einrichten eines Druckauftrags zeigt der Drucker bzw. Anwender dem Farbmesskopf auf einem ersten Druckbogen die Position des Druckkontrollstreifens. Dies kann mittels eines optischen Positionszeigers, zum Beispiel eines Laserpointers, erfolgen, welcher im Messkopfgehäuse integriert ist und die Messunterlage an einer bekannten Position relativ zur Messposition beleuchtet. Bei diesem Ablauf führt der Farbmesskopf zuerst eine absolute Weissmessung auf der Weissreferenzkachel WRK aus und fährt dann an die entsprechende Position über dem Weissreferenzstreifen WR. An dieser Position führt dann der Farbmesskopf eine Messung aus und legt einen lokalen Referenzwert fest. Diese Position entspricht der Ruheposition des Farbmesskopfs für den ganzen Druckauftrag. Bei jeder Bogenmessung wird an dieser Position vor und/oder nach dem Messlauf ein Weissabgleich ausgeführt.

Wenn die Transfermessung durchgeführt ist, können weitere Weissmessungen bei folgenden Messläufen am Weissreferenzstreifen WR unter Berücksichtigung der Transfermessung durchgeführt werden, was wesentlich schneller geht, weil der Messkopf dabei nicht an die (normalerweise abseits des Abtastbereichs angeordnete) Weissreferenzkachel WRK verfahren werden muss. Die Transfermessung muss in regelmässigen zeitlichen Abständen wiederholt werden, um den Einfluss von Verschmutzung zu kompensieren.

In der Abtastvorrichtung müssen für die Messung mit und ohne Polarisationsfilter zwei entsprechende absolute Weisskalibrationen hinterlegt sein. Beide Referenzwerte müssen auch auf den Weissstreifen durch Messungen mit beiden Filtern transferiert werden.

Der korrekte Messabstand in z-Richtung zum Weissreferenzstreifen WR und auch zur Weissreferenzkachel WRK wird durch eine Messreihe in verschiedenen Höhen und Bestimmung des Sollabstands nach einem Kriterium bestimmt. Als Kriterium kann z.B. die Mitte desjenigen Höhenbereichs (z-Bereichs) gewählt werden, bei dem die Variation aller in diesem Bereich gemessenen Messwerte minimal ist. Diese Bestimmung des korrekten Messabstands (Soll-Messabstands) ist weiter unten anhand der Fig. 13 näher beschrieben. Die Ausmessung des Weissreferenzstreifens WR kann aber auch im Sollabstand des Messkopfs über dem Druckbogen erfolgen und das Messergebnis rechnerisch korrigiert werden. Darauf wird weiter unten noch näher eingegangen.

Die erfindungsgemässe Abtastvorrichtung ist vorzugsweise ähnlich wie beim eingangs erwähnten bekannten System Intellitrax mit einem Spurlage-Regelungssystem (Tracking System) für den Farbmesskopf MH ausgestattet. Das Spurlage-Regelungssystem ist programmtechnisch in der Hauptsteuerung 104 der Mess- und Antriebssteuerung MDC implementiert und in Fig. 4 durch den Block 110 symbolisiert. Es kann zur Lokalisierung des Druckkontrollstreifens CMS auf dem Druckbogen S z.B. die Messsignale des Zeilenscanners LS auswerten. Vorzugsweise ist aber für das Spurlage-Regelungssystem am Farbmesskopf MH mit diesem mitbeweglich ein separater kurzer Miniaturzeilenscanner angebracht, dessen Signale ebenfalls von der Mess- und Antriebssteuerung MDC ausgewertet werden. Das Spurlage-Regelungssystem ermöglicht während eines Messlaufs des Farbmesskopfs eine aktive Kontrolle der lateralen Messposition gegenüber der Längsrichtung des Druckkontrollstreifens auf dem Druckbogen.

Beim Einrichten eines neuen Druckauftrags muss der Drucker den Farbmesskopf in der Abtastvorrichtung einmalig so positionieren, dass sich der Druckkontrollstreifen auf dem Bogen im Fangbereich des Spurlage-Regelungssystems befindet. Der Farbmesskopf befindet sich dann an dieser Warteposition mit der Messöffnung über dem Weissreferenzstreifen WR, um kontinuierliche Weissmessungen auszuführen. Bei einem anschliessenden Messlauf muss der Drucker den Bogen nur mit dem Druckkontrollstreifen innerhalb des Fangbereichs des Spurlage-Regelungssystems auflegen. Der Farbmesskopf kann dann automatisch mit minimaler Fahrzeit die Messung ausführen. Die Zeit für eine Weissmessung der punktförmigen Weissreferenzkachel WRK entfällt. Ein automatischer Weissabgleich auf dem Streifen wird vor und nach der abtastenden Messreihe ausgeführt. Anhand der zwei Weissmessungen kann eine zeitliche Pegeldrift des Messsystems detektiert und auch durch Interpolation zwischen den beiden Messwerten kompensiert werden.

Für hochpräzise Messungen ist es extrem wichtig, dass der Randabstand zwischen Beleuchtungs- und Messfleck des Farbmesskopfs MH auf dem Messobjekt S so klein wie möglich gehalten wird. Die Grösse des Randabstand hängt in der verwendeten 45°/0°-Messgeometrie von der Summe aller auftretenden Abweichungen in z-Richtung (Höhenabweichungen) plus Justagefehlern ab und beinhaltet den maximalen Planaritätsfehler der Messunterlage (Messtisch MT) über die gesamte Messfläche, die Positioniergenauigkeit des Sammelflecks gegenüber den Beleuchtungsflecken und die Abbildungsunschärfen im Bereich der Ränder von Beleuchtungsfleck und Sammelfleck.

Aus Kostengründen ist es üblich, für die Messung grossflächiger Druckformate die Planarität der Auflagenfläche (Messtisch MT) nicht zu hoch zu spezifizieren. Da dies den Randabstand zwischen Beleuchtungsfleck und Sammelfleck aber entsprechend vergrössert, ist die Abtastvorrichtung bzw. der Farbmesskopf mit einer Abstandsregelung in der Mess- und Antriebssteuerung MDC ausgerüstet. Die Abstandsregelung misst mittels eines z.B. am Gehäuse des Farbmesskopfs befestigten Abstandssensors die Abstandsschwankungen zur Unterlage und löst eine entsprechende Abstandskorrektur mit dem Antrieb in z-Richtung aus, so dass sich der Farbmesskopf MH an jedem Punkt im gleichen (Soll-)Abstand über der Unterlage (dem Messtisch) befindet.

Die aktive Abstandsregelung kann gemäss einem weiteren Aspekt der Erfindung auch ohne laufende Abstandsmessung mittels eines Abstandssensors implementiert werden. Zu diesem Zweck wird während der Fertigung vor der Inbetriebnahme der Abtastvorrichtung die Planarität der Auflagefläche (Messtisch MT) in Bezug zur mechanischen Halterung des Farbmesskopfs MH an einer Vielzahl von Messpunkten über der gesamten Messtischfläche gemessen. Die Messpunkte können z.B. in einem regelmässigen Messraster gewählt werden. Die Abstände der Messpunkte im Messraster werden entsprechend der lokalen Steigung der Abstandsvariation und der geforderten Genauigkeit gewählt. Die Koordinaten (x,y) der Messpunkte sowie die ermittelten Abstände (absoluten Höhen) des Farbmesskopfs bei korrektem Soll-Messabstand über den Messpunkten werden als Planaritätsmesswerte in der Mess- und Antriebssteuerung MDC gespeichert. Sie bilden gewissermassen ein Höhen- bzw. Tiefenprofil der Oberfläche des Messtischs gegenüber einer Referenzebene, die durch die beiden Bewegungsachsen x und y des Farbmesskopfs MH gegeben ist. Mittels numerischer Interpolation zwischen den Messpunkten des Messrasters kann für jede Position des Messtischs bzw. seiner Oberfläche eine entsprechende Soll-Höhe des Farbmesskopfs berechnet und dann für die Abstandsregelung verwendet werden.

Die Abstände (Höhen) können während der Fertigung der Abtastvorrichtung mittels eines Abstandssensors, welcher vorübergehend an der Halterung des Farbmesskopfs MH befestigt wird, gemessen werden. Gemäss einem weiteren Aspekt der Erfindung erfolgt aber diese Höhen- bzw. Abstandsmessung mit dem Farbmesskopf MH selbst. Diese Methode bietet den Vorteil, dass die Planaritätsmessung im Feld zu einem späteren Zeitpunkt im Bedarfsfall ohne zusätzliche Hilfsmittel wiederholt werden kann.

Für diese im Folgenden anhand der Fig. 13 erläuterte Methode wird an jedem Messpunkt der vom Farbmesskopf MH erzeugte Signalpegel (z.B. die aus den einzelnen Spektralwerten berechnete Helligkeit I im Messpunkt) für verschiedene, jeweils in kleinen Stufen veränderte Höheneinstellungen z gemessen. Die Höhenverstellung erfolgt mittels der Antriebsteuerung 108 in z-Richtung. Die Messreihe der Signalpegel I wird an jeder Position gegenüber dem jeweiligen Maximalwert I₀ normalisiert. Die Kurven der normalisierten Signalpegel in Funktion der z-Position gleichen sich an jedem Messpunkt. In der Fig. 13 sind zwei solche normalisierte Kurven Iₙ(z)_{R} und Iₙ(z)_{P} für zwei Messpunkte R bzw. P dargestellt. Die dem Soll-Messabstand entsprechende absolute Soll-Höhe des Farbmesskopfs MH wird nun an jedem Messpunkt des Messrasters nach einem gleichen Kriterium auf eindeutige Weise bestimmt. Eine Möglichkeit dazu besteht darin, die Soll-Höhe als den Mitten-z-Wert eines bezüglich seiner Breite festgelegten z-Bereichs Δz festzulegen, wobei die z-Lage des z-Bereichs Δz so ermittelt wird, dass die Variation der innerhalb von ihm liegenden (normalisierten) Signalpegel minimal ist. In der Fig. 13 sind die so ermittelten Mitten-z-Werte für die beiden Messpunkte R und P mit Z_{R} bzw. z_{P} bezeichnet. Die entsprechenden Mitten-z-Werte an jedem Messpunkt ergeben dann die absoluten Soll-Höhen des Farbmesskopfs über den Messpunkten (auf der Messtischoberfläche) und werden wie beschrieben zusammen mit den x,y-Koordinaten der Messpunkte des Messrasters für die spätere Verwendung in der aktiven z-Einstellung des Farbmesskopfs MH auf den korrekten Soll-Messabstand abgespeichert.

Mit der vorstehend beschriebenen aktiven Höhen- bzw. Abstandsregelung werden nur Planaritätsfehler der Messtischoberfläche kompensiert, nicht aber die Einflüsse verschiedener Dicken der Messobjekte (Papierdicken). Für letzteres ist die Höhenregelung noch mit einer Papierdickenkorrekturfunktion ausgestattet.

Beim Einrichten des Druckauftrags ermittelt das Abstandsregelsystem auf dem ersten auszumessenden Druckbogen die verwendete Papierdicke. Zu diesem Zweck fährt der Farbmesskopf automatisch an eine (beliebige) Position auf dem Druckbogen. Dann wird die Soll-Höhe des Farbmesskopfs in z-Richtung bestimmt, bei welcher sich der Farbmesskopf im korrekten Soll-Messabstand über der Oberfläche des Druckbogens befindet. Dies kann beispielsweise dadurch erfolgen, dass mit dem Farbmesskopf wie vorstehend beschrieben Messungen in verschiedenen Höheneinstellungen gemacht werden und anhand der dabei erzeugten Messreihe die dem korrekten Soll-Messabstand entsprechende Höhe (z-Lage) des Farbmesskopfs ermittelt wird. Die z-Differenz zwischen dieser Höhe und der (bei der Planaritätsmessung ermittelten) Soll-Höhe für den darunterliegenden Punkt auf der Messtischoberfläche ergibt die Papierdicke.

Zu Beginn des Messvorgangs von nachfolgenden Druckbögen befindet sich der Farbmesskopf in Warteposition auf der zum korrekten Soll-Messabstand gehörenden Soll-Höhe über dem Weissreferenzstreifen WR. In der Beschleunigungsphase der Abtastbewegung zwischen Weissreferenzstreifen WR und Druckbogen S korrigiert das Abstandsregelsystem die Höhenposition des Farbmesskopfs (unter gleichzeitiger Planaritätskompensation) für die Papierdicke so, dass die Messungen, welche über dem Druckbogen liegen, mit dem richtigen Soll-Messabstand ausgeführt werden können. Die Einstellung bzw. Nachführung des Farbmesskopfs MH auf die für den korrekten Soll-Messabstand erforderliche Höhe kann alternativ wie bei der Planaritätsmessung auch mittels eines konventionellen Abstandssensors und von diesem angesteuerten Regelsystems erfolgen. Dies erfordert jedoch einen zusätzlichen apparativen Aufwand.

Gemäss einer besonders zweckmässigen alternativen Vorgehensweise kann sich der Farbmesskopf zu Beginn des Messlaufs auch auf einer Höhe in Warteposition befindet, welche dem korrekten Soll-Messabstand am Anfangsrand des Druckbogens entspricht. Die Warteposition liegt dabei in x-Richtung vor dem Weissreferenzstreifen WR. Wenn der Farbmesskopf über den Weissreferenzstreifen fährt, erfolgt dann die Weissmessung (meistens) in "falscher" Höhe. Damit eine quantitativ richtige Weissmessung dennoch möglich ist, muss die Messung, die auf der falschen Höhe erfolgt ist, in ein Messergebnis entsprechend der richtigen Höhe über dem Weissreferenzstreifen WR umgerechnet werden. Pro spektralem Messwert wird dazu je ein Korrekturfaktor benötigt. Die Korrekturfaktoren können aus der bei der Fokussierungsmessung auf dem Weissreferenzstreifen erfolgenden (spektralen) Höhen-Intensitätsfunktion (Fig. 13) bestimmt werden. Dieses Messen auf der falschen Höhe über dem Weissreferenzstreifen ist besonders dann zweckmässig, wenn am Farbmesskopf der schon erwähnte Miniaturzeilenscanner als Spurlage-Sensor angeordnet ist. Dieser befindet sich in der Praxis in x-Richtung in einem Abstand von ca. 10 cm vom Messfleck des Farbmesskopfs, d.h. die Messung des Spurlage-Sensors eilt dem Messfleck des Farbmesskopfs voraus. Würde der Weissreferenzstreifen mit der korrekten Soll-Höhe des Farbmesskopfs gemessen, so würde dies bedeuten, dass der vorauseilende Spurlage-Sensor u.U. auf einer falschen Höhe beginnt den Druckbogen abzutasten. Dies würde ein korrektes "Einfädeln" auf dem Farbmessstreifen u.U. erschweren oder verunmöglichen.

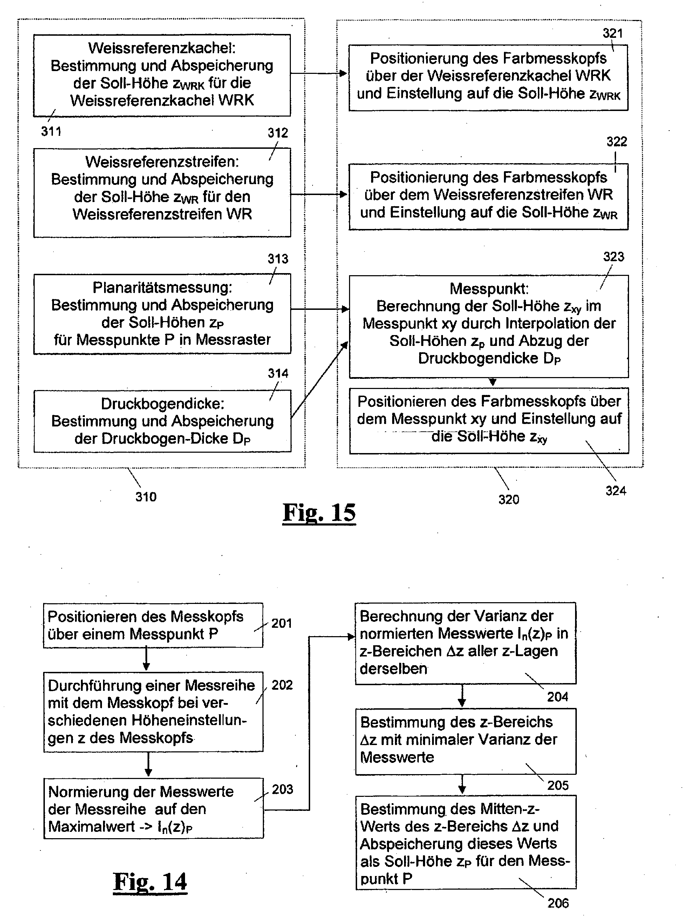

In den Figuren 14 und 15 sind die einzelnen Schritte der vorstehend erläuterten aktiven Höhen- bzw. Abstandsregelung nochmals übersichtlich in Form eines Blockschemas zusammengestellt.

Gemäss Fig. 14 wird für die Ermittlung der Sollhöhe des Farbmesskopfs über einem Messpunkt P der Farbmesskopf MH über dem Messpunkt positioniert (Block 201). Dann wird der Farbmesskopf in unterschiedliche Höhen z verstellt und bei jeder Höhe z eine Messung durchgeführt (Block 202). Die dabei gewonnene Messreihe wird auf ihren Maximalwert normiert (Block 203). Dann wird die Varianz der normierten Messwerte für z-Bereiche Δz fester Breite für alle möglichen z-Lagen dieser Bereiche berechnet (Block 204). Es wird dann derjenige z-Bereich ermittelt, für den die Varianz minimal ist (Block 205). Und schliesslich wird der Mitten-z-Wert dieses z-Bereichs mit minimaler Messwert-Varianz bestimmt und als Sollhöhe zₚ für den betreffenden Messpunkt P abgespeichert (Block 206).

Die Funktionsweise der aktiven Höhenregelung geht aus Fig. 15 hervor. Sie umfasst zwei Gruppen von Funktionen, die jeweils durch Kästen 310 bzw. 320 zusammengefasst sind. Im Kasten 310 befinden sich die vorbereitenden Funktionsschritte, im Kasten 320 die eigentlichen Regelschritte während der verschiedenen Messabläufe.

Im Block 311 wird die Sollhöhe Z_{WRK} des Farbmesskopfs über der Weissreferenzkachel WRK bestimmt und abgespeichert, wobei gemäss Fig. 14 verfahren wird.

In gleicher Weise wird in Block 312 die Sollhöhe Z_{WR} des Weissreferenzstreifens WR bestimmt und abgespeichert. Erforderlichenfalls können auch mehrere Sollhöhen an verschiedenen Positionen des Weissreferenzstreifens bestimmt werden.

Im Block 313 erfolgt die Planaritätsmessung der Messtischoberfläche, wobei die Sollhöhen z_{P} des Farbmesskopfs über einem Raster von Messpunkten P auf der Messtischoberfläche ermittelt und abgespeichert werden. Auch dabei wird nach dem in Fig. 14 dargestellten Verfahren vorgegangen.

Im Block 314 schliesslich wird die Dicke D_{P} des auszumessenden Druckbogens ermittelt und abgespeichert. Dies erfolgt ebenfalls analog Fig. 14.

Nach diesen vorbereitenden Messungen bzw. Schritten ist die Abtastvorrichtung für eigentliche Messungen bereit.

Für die Ausmessung der Weissreferenzkachel WRK wird der Farbmesskopf über dieser positioniert und auf die gespeicherte Sollhöhe z_{WRK} eingestellt (Block 321). Dann wird die Weissmessung durchgeführt.

Für die Ausmessung eines Punkts des Weissreferenzstreifens WR wird der Farbmesskopf über diesem Punkt positioniert und auf die für diesen Punkt gespeicherte Sollhöhe z_{WR} eingestellt (Block 322). Dann wird die Weissmessung durchgeführt.

Für die Ausmessung eines Messpunkts des Druckbogens mit den Koordinaten xy wird die für diesen Punkt erforderliche Sollhöhe Z_{xy} des Farbmesskopfs durch Interpolation der abgespeicherten Sollhöhen z_{P} der Rasterpunkte P und unter Berücksichtigung (Abzug) der Dicke D_{P} des Druckbogens berechnet (Block 323). Dann wird der Farbmesskopf an den Messpunkt xy verfahren und dabei gleichzeitig auf die berechnete Sollhöhe Z_{xy} eingestellt (Block 324). Anschliessend erfolgt die Ausmessung des Messpunkts xy.

Die in den Figuren 14 und 15 schematisch dargestellten Funktionsblöcke sind programmtechnisch realisiert und in der Mess- und Antriebssteuerung MDC der Abtastvorrichtung implementiert und dort durch den Block 120 symbolisiert. Es ist aber auch möglich, diese Funktionen im externen Rechner C zu implementieren und dann die Mess- und Antriebssteuerung MDC der Abtastvorrichtung entsprechend anzusteuern.

## Patentansprüche

1. Abtastvorrichtung mit einem Farbmesskopf (MH) für die punktweise Ausmessung der Farbeigenschaften eines Messobjektes (S), wobei die Abtastvorrichtung den Farbmesskopf wenigstens eindimensional über ein auszumessendes Messobjekt bewegen kann, wobei der Farbmesskopf (MH) wenigstens einen Beleuchtungskanal (IC) und einen Sammelkanal (CC) aufweist, welcher Beleuchtungskanal (IC) eine Lichtquelle (10) und optische Mittel (12-22) aufweist, um das Messobjekt (S) an einem Messort unter einem mittleren Einfallswinkel von 45° zu beleuchten, und welcher Sammelkanal (CC) optische Mittel (24-34) aufweist, um vom Messobjekt am Messort ausgehendes Messlicht unter einem mittleren Sammelwinkel von 0° aufzufangen und in einen Lichtleiter (LF) einzukoppeln, welcher das aufgefangene Messlicht einem vorzugsweise als Spektrometer ausgebildeten wellenlängenselektiven lichtelektrischen Wandler (SP) zuführt, der es in eine Anzahl von Wellenlängenbereichen auflöst und für jeden Wellenlängenbereich ein korrespondierendes elektrisches Messsignal erzeugt, **dadurch gekennzeichnet, dass** die optischen Mittel im Beleuchtungskanal (IC) eine Kollimationsoptik (12), eine Feldblende (16), eine symmetrische telezentrische Abbildungsoptik (18) und ein vorzugsweise messobjektseitig fest angeordnetes Polarisationsfilter (22) umfassen und dass die optischen Mittel im Sammelkanal (CC) eine Abbildungsoptik (28), eine Feldblende (32) und eine Einkoppeloptik (34) umfassen, wobei die Kollimationsoptik (12) das von der Lichtquelle (10) stammende Beleuchtungslicht kollimiert und damit die Feldblende (16) des Beleuchtungskanals (IC) achsparallel im wesentlichen homogen ausleuchtet, wobei die Polarisationsachse des Polarisationsfilters (22) gegenüber der Einfallsebene auf das Messobjekt um 45° verkippt ausgerichtet ist und wobei die telezentrische Abbildungsoptik (18) die Feldblende (16) scharf in eine Messebene abbildet und dabei einen Beleuchtungsfleck (IS) erzeugt, und wobei ferner die Abbildungsoptik (28) im Sammelkanal (CC) die Feldblende (32) scharf in die Messebene innerhalb des Beleuchtungsflecks (IS) abbildet und durch das Abbild der Feldblende einen Messfleck (MS) definiert, und wobei der Sammelkanal (CC) nur aus dem Messfleck (MS) stammendes Messlicht auffängt und über die Einkoppeloptik (34) in den Lichtleiter (LF) einkoppelt.

2. Abtastvorrichtung nach Anspruch 1, **dadurch gekennzeichnet, dass** im Sammelkanal (CC) vorzugsweise im Strahlengang vor der Abbildungsoptik (28) ein vorzugsweise schaltbarer Polarisationsfilter (26) angeordnet ist.

3. Abtastvorrichtung nach einem der voranstehenden Ansprüche, **dadurch gekennzeichnet, dass** die Einkoppeloptik (34) telezentrisch ausgelegt ist.

4. Abtastvorrichtung nach einem der voranstehenden Ansprüche, **dadurch gekennzeichnet, dass** die Feldblende (16) im Beleuchtungskanal (IC) zum Strahlengang um 45° geneigt angeordnet ist und dass der Beleuchtungskanal (IC) im Strahlengang nach der Feldblende (16) einen Umlenkspiegel (20) aufweist, welcher den Beleuchtungsstrahlengang um 45° umlenkt.

5. Abtastvorrichtung nach einem der voranstehenden Ansprüche, **dadurch gekennzeichnet, dass** die optischen Mittel im Beleuchtungskanal (IC) vorzugsweise im Strahlengang zwischen der Lichtquelle (10) und der Kollimationsoptik (12) vorzugsweise durch eine Apodisierungsmaske gebildete Apodisierungsmittel (14) umfassen, welche die Homogenität der Ausleuchtung der Feldblende (16) verbessern.

6. Abtastvorrichtung nach einem der voranstehenden Ansprüche, **dadurch gekennzeichnet, dass** der Sammelkanal (CC) messobjektseitig mit einem vorzugsweise auswechselbar ausgebildeten Schutzfenster (24) ausgestattet ist.

7. Abtastvorrichtung nach einem der voranstehenden Ansprüche, **dadurch gekennzeichnet, dass** der Farbmesskopf (MH) mit einem UV-Beleuchtungskanal (ICUV) zur Beaufschlagung des Messobjekts mit UV-Licht ausgestattet ist, wobei der UV-Beleuchtungskanal (ICUV) einen für UV-Licht spiegelnden und für sichtbares Licht durchlässigen dichroiden Filter (46) umfasst, welcher im Strahlengang des Sammelkanals (CC) vorzugsweise unter 45° geneigt angeordnet ist und von einer UV-Lichtquelle (40) stammendes UV-Licht in den Strahlengang des Sammelkanals (CC) einspiegelt.

8. Abtastvorrichtung nach Anspruch 7, **dadurch gekennzeichnet, dass** der UV-Beleuchtungskanal (ICUV) eine Blende (42) umfasst, welche von der Abbildungsoptik (28) im Sammelkanal (CC) in die Messebene abgebildet wird.

9. Abtastvorrichtung nach einem der voranstehenden Ansprüche, **dadurch gekennzeichnet, dass** der Farbmesskopf (MH) mit zwei oder mehreren Beleuchtungskanälen (IC) ausgestattet ist.

10. Abtastvorrichtung nach Anspruch 9, **dadurch gekennzeichnet, dass** die Feldblenden (16) in den zwei oder mehreren Beleuchtungskanälen (IC) zumindest teilweise unterschiedliche Formen und/oder Größen aufweisen.

11. Abtastvorrichtung nach einem der Ansprüche 9 bis 10, **dadurch gekennzeichnet, dass** zwei Beleuchtungskanäle (IC) bezüglich des Sammelkanals (CC) um 90° winkelversetzt angeordnet sind, so dass das Messobjekt (S) aus zwei bezüglich der Normalen auf das Messobjekt am Messort um 90° winkelversetzten Raumrichtungen beleuchtet wird.

12. Abtastvorrichtung nach einem der Ansprüche 9-11, **dadurch gekennzeichnet, dass** vier Beleuchtungskanäle (IC) vorgesehen sind, welche bezüglich des Sammelkanals (CC) jeweils um 90° zu einander winkelversetzt angeordnet sind, so dass sich jeweils zwei Beleuchtungskanäle (IC) diametral gegenüber stehen.

13. Abtastvorrichtung nach Anspruch 12, **dadurch gekennzeichnet, dass** der Sammelkanal (CC) einen Polarisationsfilter (26) aufweist und dass zwei benachbarte, um 90° zu einander winkelversetzte Beleuchtungskanäle (IC) mit je einem Polarisationsfilter (22) und die beiden anderen benachbarten Beleuchtungskanäle (IC) ohne Polarisationsfilter ausgestattet sind.

14. Abtastvorrichtung nach einem der voranstehenden Ansprüche, **dadurch gekennzeichnet, dass** der Farbmesskopf (MH) einen Glanzmesskanal (GC) aufweist, der dem Beleuchtungskanal (IC) oder einem der Beleuchtungskanäle (IC) diametral gegenüber angeordnet ist und vom Messobjekt (S) reflektiertes Licht auffängt.

15. Abtastvorrichtung nach Anspruch 14, **dadurch gekennzeichnet, dass** der Glanzmesskanal (GC) im wesentlichen gleich ausgebildet ist wie der Beleuchtungskanal (IC), wobei Lichtquelle und Kollimationsoptik fehlen und die Feldblende (16') spiegelnd ausgebildet ist und das Messlicht über eine zweite Einkoppeloptik (34') und einen zweiten Lichtleiter (LF2) in einen zweiten wellenlängenselektiven Wandler (SP2) lenkt.

16. Abtastvorrichtung nach einem der vorangehenden Ansprüche, **gekennzeichnet durch** eine Auflagefläche (MT) für das Messobjekt (S), eine Antriebseinrichtung (D) zur Bewegung des Farbmesskopfs (MH) über die Auflagefläche (MT) in wenigstens einer Dimension derselben und zur Höhenverstellung des Farbmesskopfs (MH) in Richtung senkrecht zur Auflagefläche sowie eine die Antriebseinrichtung (D) ansteuernde und mit dem Farbmesskopf (MH) zusammenarbeitende Mess- und Antriebssteuerung (MDC).

17. Abtastvorrichtung nach Anspruch 16, **dadurch gekennzeichnet, dass** sie eine Abstandsregelung (120) aufweist, welche für jeden Messpunkt den Abstand des Farbmesskopfs (MH) über dem Messort in Richtung senkrecht zur Auflagefläche (MT) auf einen Soll-Messabstand einstellt.

18. Abtastvorrichtung nach Anspruch 17, **dadurch gekennzeichnet, dass** die Abstandsregelung (120) eine Planaritätsmessung der Auflagefläche (MT) durchführt und die dabei ermittelten Planaritätsmesswerte (z_{P}) abspeichert und die Abstandseinstellung des Farbmesskopfs (MH) unter Berücksichtigung der gespeicherten Planaritätsmesswerte vornimmt.

19. Abtastvorrichtung nach Anspruch 18, **dadurch gekennzeichnet, dass** die Abstandsregelung (120) für die Planaritätsmessung in einem Raster von über die Auflagefläche (MT) verteilten Messpunkten (P) die Soll-Höhen (z_{P}) des Farbmesskopf (MH) über diesen Messpunkten (P) ermittelt und als Planaritätsmesswerte (z_{P}) abspeichert.

20. Abtastvorrichtung nach einem der Ansprüche 17 bis 19, **dadurch gekennzeichnet, dass** die Abstandsregelung (120) eine Messung der Dicke (D_{P}) des Messobjekts (S) durchführt und speichert und die Abstandseinstellung des Farbmesskopfs (MH) unter Berücksichtigung der gespeicherten Dicke des Messobjekts vornimmt.

21. Abtastvorrichtung nach Anspruch 20, **dadurch gekennzeichnet, dass** die Abstandsregelung (120) für die Messung der Dicke (D_{P}) des Messobjekts (S) die Soll-Höhe des Farbmesskopf (MH) über einem Messpunkt auf dem Messobjekt und die Soll-Höhe des Farbmesskopf (MH) über einem unter diesem Messpunkt auf der Auflagefläche (MT) liegenden Punkt bestimmt und die Differenz dieser beiden Soll-Höhen als Dicke (D_{P}) des Messobjekts speichert.

22. Abtastvorrichtung nach einem der Ansprüche 17 bis 21, **dadurch gekennzeichnet, dass** die Abstandsregelung (120) die Soll-Höhe des Farbmesskopfs (MH) an einem Messpunkt aus mit dem Farbmesskopf (MH) bei verschiedenen Höheneinstellungen desselben am Messpunkt gemessenen Messwerten bestimmt.

23. Abtastvorrichtung nach Anspruch 17, **dadurch gekennzeichnet, dass** die Abstandsregelung (120) als Soll-Höhe des Farbmesskopfs (MH) an einem Messpunkt diejenige Höheneinstellung des Farbmesskopfs bestimmt, in deren Umgebung sich die mit dem Farbmesskopf gemessenen Messwerte am wenigsten ändern.

24. Abtastvorrichtung nach einem der Ansprüche 16 bis 23, **dadurch gekennzeichnet, dass** sie mit einem Spurlage-Regelungssystem (110) für den Farbmesskopf (MH) ausgestattet ist, welches die Lage einer abzutastenden Spur, insbesondere eines Druckkontrollstreifens, auf dem Messobjekt (S) erkennt und den Farbmesskopf (MH) entlang dieser Spur führt.

25. Abtastvorrichtung nach einem der Ansprüche 16 bis 24, **dadurch gekennzeichnet, dass** sie mit einer kalibrierten, langzeitstabilen Weißreferenzkachel (WRK) und einem auf der Auflagefläche (MT) angeordneten Weißreferenzstreifen (WR) ausgestattet ist, und dass die Mess- und Antriebssteuerung (MDC) dazu ausgebildet ist, die Weißkalibrierung der Abtastvorrichtung aufgrund von Weißmessungen am Weißreferenzstreifen (WR) durchzuführen, wobei diese Weißmessungen durch zuvor erfolgte Transfermessungen an der Weißreferenzkachel (WRK) kalibriert werden.

26. Abtastvorrichtung nach einem der Ansprüche 16 bis 25, **dadurch gekennzeichnet, dass** sie mit einem auf der Auflagefläche (MT) angeordneten Weißreferenzstreifen (WR) ausgestattet ist, und dass die Mess- und Antriebssteuerung (MDC) dazu ausgebildet ist, mit dem Farbmesskopf (MH) in vom korrekten Soll-Messabstand abweichendem Abstand gemessene Weißmesswerte rechnerisch so zu korrigieren, dass sie in korrektem Soll-Messabstand gemessenen Weißmesswerten entsprechen.

## Claims

1. Scanning device with a colour measuring head (MH) for the point-by-point measurement of the colour properties of a measurement object (S), wherein the scanning device can move the colour measuring head at least one-dimensionally over a measurement object to be measured, wherein the colour measuring head (MH) has at least one illumination channel (IC) and a collecting channel (CC), which illumination channel (IC) has a light source (10) and optical means (12-22) for illuminating the measurement object (S) at a measurement location at a mean angle of incidence of 45°, and which collecting channel (CC) has optical means (24-34) for collecting measurement light coming from the measurement object at the measurement location at a mean collecting angle of 0° and coupling it into a light guide (LF) which feeds the collected measurement light to a wavelength-selective photoelectric converter (SP) designed as a spectrometer, which breaks it up into a number of wavelength ranges and generates a corresponding electric measurement signal for each wavelength range, **characterised in that** the optical means in the illumination channel (IC) comprise a collimating lens (12), a field stop (16), a symmetrical telecentric imaging lens (18) and a polarisation filter (22) which is fixedly arranged preferably on the measurement object side, and **in that** the optical means in the collecting channel (CC) comprise an imaging lens (28), a field stop (32) and a coupling lens (34), wherein the collimating lens (12) collimates the illumination light coming from the light source (10) and thus substantially homogeneously illuminates the field stop (16) of the illumination channel (IC) in an axis-parallel manner, wherein the polarisation axis of the polarisation filter (22) is oriented in a manner tilted by 45° relative to the incidence plane on the measurement object, and wherein the telecentric imaging lens (18) images the field stop (16) sharply in a measurement plane and in doing so generates an illumination spot (IS), and wherein furthermore the imaging lens (28) in the collecting channel (CC) images the field stop (32) sharply in the measurement plane within the illumination spot (IS) and by means of the image of the field stop defines a measurement spot (MS), and wherein the collecting channel (CC) collects only measurement light coming from the measurement spot (MS) and couples it into the light guide (LF) via the coupling lens (34).

2. Scanning device according to claim 1, **characterised in that** a preferably switchable polarisation filter (26) is arranged in the collecting channel (CC) preferably in the beam path before the imaging lens (28).

3. Scanning device according to one of the preceding claims, **characterised in that** the coupling lens (34) is telecentric.

4. Scanning device according to one of the preceding claims, **characterised in that** the field stop (16) in the illumination channel (IC) is arranged in a manner inclined by 45° relative to the beam path, and **in that** the illumination channel (IC) has in the beam path after the field stop (16) a deflection mirror (20) which deflects the illumination beam path by 45°.

5. Scanning device according to one of the preceding claims, **characterised in that** the optical means in the illumination channel (IC) comprise, preferably in the beam path between the light source (10) and the collimating lens (12), apodising means (14) formed preferably by an apodising mask which improve the homogeneity of the illumination of the field stop (16).

6. Scanning device according to one of the preceding claims, **characterised in that** the collecting channel (CC) is equipped with a preferably interchangeable protective window (24) on the measurement object side.

7. Scanning device according to one of the preceding claims, **characterised in that** the colour measuring head (MH) is equipped with a UV illumination channel (ICUV) for exposing the measurement object to UV light, wherein the UV illumination channel (ICUV) comprises a dichroic filter (46) which reflects UV light and is permeable to visible light and which is arranged in the beam path of the collecting channel (CC) in a manner preferably inclined by 45° and reflects UV light coming from a UV light source (40) into the beam path of the collecting channel (CC).

8. Scanning device according to claim 7, **characterised in that** the UV illumination channel (ICUV) has an aperture (42) which is imaged in the measurement plane by the imaging lens (28) in the collecting channel (CC).

9. Scanning device according to one of the preceding claims, **characterised in that** the colour measuring head (MH) is equipped with two or more illumination channels (IC).

10. Scanning device according to claim 9, **characterised in that** the field stops (16) in the two or more illumination channels (IC) have at least partially different shapes and/or sizes.

11. Scanning device according to one of claims 9 to 10, **characterised in that** two illumination channels (IC) are arranged in a manner such as to be offset by an angle of 90° relative to the collecting channel (CC), so that the measurement object (S) is illuminated from two spatial directions which are offset by an angle of 90° relative to the normal on the measurement object at the measurement location.

12. Scanning device according to one of claims 9 to 11, **characterised in that** four illumination channels (IC) are provided, which are in each case arranged offset by an angle of 90° relative to one another in relation to the collecting channel (CC), so that in each case two illumination channels (IC) are located diametrically opposite one another.

13. Scanning device according to claim 12, **characterised in that** the collecting channel (CC) has a polarisation filter (26), and **in that** two adjacent illumination channels (IC) which are offset by an angle of 90° relative to one another are each equipped with a polarisation filter (22) and the two other adjacent illumination channels (IC) have no polarisation filter.

14. Scanning device according to one of the preceding claims, **characterised in that** the colour measuring head (MH) has a gloss measuring channel (GC) which is arranged diametrically opposite the illumination channel (IC) or one of the illumination channels (IC) and collects light reflected by the measurement object (S).

15. Scanning device according to claim 14, **characterised in that** the gloss measuring channel (GC) is formed in a manner substantially identical to the illumination channel (IC), wherein the light source and the collimating lens are omitted and the field stop (16') is designed to be reflective and deflects the measurement light via a second coupling lens (34') and a second light guide (LF2) into a second wavelength-selective converter (SP2).

16. Scanning device according to one of the preceding claims, **characterised by** a support surface (MT) for the measurement object (S), a drive device (D) for moving the colour measuring head (MH) over the support surface (MT) in at least one dimension thereof and for adjusting the height of the colour measuring head (MH) in the direction perpendicular to the support surface, and a measurement and drive controller (MDC) which actuates the drive device (D) and cooperates with the colour measuring head (MH).

17. Scanning device according to claim 16, **characterised in that** it comprises a distance regulator (120) which, for each measurement point, sets to a nominal measurement distance the distance of the colour measuring head (MH) above the measurement location in the direction perpendicular to the support surface (MT).

18. Scanning device according to claim 17, **characterised in that** the distance regulator (120) carries out a planarity measurement of the support surface (MT) and stores the determined planarity measurement values (z_{P}) and sets the distance of the colour measuring head (MH) taking account of the stored planarity measurement values.

19. Scanning device according to claim 18, **characterised in that** the distance regulator (120) for the planarity measurement in a grid of measurement points (P) distributed over the support surface (MT) determines the nominal heights (z_{P}) of the colour measuring head (MH) above these measurement points (P) and stores these as planarity measurement values (z_{P}).

20. Scanning device according to one of claims 17 to 19, **characterised in that** the distance regulator (120) carries out and stores a measurement of the thickness (D_{P}) of the measurement object (S) and sets the distance of the colour measuring head (MH) taking account of the stored thickness of the measurement object.

21. Scanning device according to claim 20, **characterised in that** the distance regulator (120), for the measurement of the thickness (D_{P}) of the measurement object (S), determines the nominal height of the colour measuring head (MH) above a measurement point on the measurement object and the nominal height of the colour measuring head (MH) above a point located below this measurement point on the support surface (MT) and stores the difference of these two nominal heights as the thickness (D_{P}) of the measurement object.

22. Scanning device according to one of claims 17 to 21, **characterised in that** the distance regulator (120) determines the nominal height of the colour measuring head (MH) at a measurement point from measurement values measured at the measurement point with the colour measuring head (MH) at different height settings.

23. Scanning device according to claim 17, **characterised in that** the distance regulator (120) determines as the nominal height of the colour measuring head (MH) at a measurement point that height setting of the colour measuring head in the region of which the measurement values measured by the colour measuring head change the least.

24. Scanning device according to one of claims 16 to 23, **characterised in that** it is equipped with a track position regulating system (110) for the colour measuring head (MH), which detects the position of a track to be scanned, in particular of a pressure checking strip, on the measurement object (S) and guides the colour measuring head (MH) along this track.

25. Scanning device according to one of claims 16 to 24, **characterised in that** it is equipped with a calibrated white reference tile (WRK) having long-term stability and with a white reference strip (WR) arranged on the support surface (MT), and **in that** the measurement and drive controller (MDC) is designed to carry out the white calibration of the scanning device on the basis of white measurements on the white reference strip (WR), wherein these white measurements are calibrated by transfer measurements on the white reference tile (WRK) that have taken place beforehand.

26. Scanning device according to one of claims 16 to 25, **characterised in that** it is equipped with a white reference strip (WR) arranged on the support surface (MT), and **in that** the measurement and drive controller (MDC) is designed to correct, by calculation, white measurement values measured with the colour measuring head (MH) at a distance differing from the correct nominal measurement distance, in such a way that said values correspond to white measurement values measured at the correct nominal measurement distance.

## Revendications

1. Dispositif de balayage avec une tête de mesure colorimétrique (MH) pour la mesure ponctuelle des caractéristiques de couleur d'un objet à mesurer (S), le dispositif de balayage pouvant déplacer la tête de mesure colorimétrique au moins selon une dimension sur un objet à mesurer, la tête de mesure colorimétrique (MH) présentant au moins un canal d'éclairage (IC) et un canal de collecte (CC), ledit canal d'éclairage (IC) présentant une source lumineuse (10) et des moyens optiques (12-22) pour éclairer l'objet à mesurer (S) en un lieu de mesure sous un angle d'incidence moyen de 45°, et ledit canal de collecte (CC) présentant des moyens optiques (24-34) pour collecter la lumière de mesure venant de l'objet à mesurer au lieu de mesure sous un angle de collecte moyen de 0° et la coupler dans un conducteur optique (LF), lequel amène la lumière de mesure collectée à un convertisseur photoélectrique (SP) sélectif selon les longueurs d'onde formé de préférence comme spectromètre, qui la divise en un certain nombre de plages de longueurs d'onde et génère pour chaque plage de longueurs d'onde un signal de mesure électrique correspondant, **caractérisé en ce que** les moyens optiques dans le canal d'éclairage (IC) comportent une optique de collimation (12), un diaphragme (16), une optique de reproduction symétrique télécentrique(18) et un filtre de polarisation (22) disposé de manière fixe de préférence du côté de l'objet à mesurer et **en ce que** les moyens optiques dans le canal de collecte (CC) comprennent une optique de reproduction (28), un diaphragme (32) et une optique de couplage (34), l'optique de collimation (12) collimatant la lumière d'éclairage venant de la source lumineuse (10) et éclairant ainsi le diaphragme (16) du canal d'éclairage (IC) parallèlement à l'axe de manière essentiellement homogène, l'axe de polarisation du filtre de polarisation (22) étant orienté basculé de 45° vis-à-vis du plan d'incidence sur l'objet à mesurer et l'optique de reproduction télécentrique (18) reproduisant le diaphragme (16) de manière nette dans un plan de mesure et générant ce faisant une surface d'éclairage (IS), et l'optique de reproduction (28) dans le canal de collecte (CC) reproduisant par ailleurs le diaphragme (32) de manière nette dans le plan de mesure à l'intérieur de la surface d'éclairage (IS) et définissant avec l'illustration du diaphragme une surface de mesure (MS), et le canal de collecte (CC) collectant uniquement la lumière de mesure venant de la surface de mesure (MS) et la couplant dans le conducteur optique (LF) via l'optique de couplage (34).

2. Dispositif de balayage suivant la revendication 1, **caractérisé en ce qu'**un filtre de polarisation (26) de préférence commutable est disposé dans le canal de collecte (CC), de préférence dans le cheminement du rayonnement avant l'optique de reproduction (28).

3. Dispositif de balayage suivant l'une des revendications précédentes, **caractérisé en ce que** l'optique de couplage (34) est conçue télécentrique.

4. Dispositif de balayage suivant l'une des revendications précédentes, **caractérisé en ce que** le diaphragme (16) dans le canal d'éclairage (IC) est incliné à 45° sur le cheminement du rayonnement et **en ce que** le canal d'éclairage (IC) présente dans le cheminement du rayonnement après le diaphragme (16) un miroir de renvoi (20) qui dévie le cheminement du rayonnement d'éclairage de 45°.

5. Dispositif de balayage suivant l'une des revendications précédentes, **caractérisé en ce que** les moyens optiques dans le canal d'éclairage (IC), de préférence dans le cheminement du rayonnement entre la source lumineuse (10) et l'optique de collimation (12), comprennent des moyens d'apodisation (14), formés de préférence par un masque d'apodisation, lesquels améliorent l'homogénéité de l'éclairage du diaphragme (16).

6. Dispositif de balayage suivant l'une des revendications précédentes, **caractérisé en ce que** le canal de collecte (CC) est équipé du côté de l'objet à mesurer d'une fenêtre de protection (24) de préférence interchangeable.

7. Dispositif de balayage suivant l'une des revendications précédentes, **caractérisé en ce que** la tête de mesure colorimétrique (MH) est équipée d'un canal d'éclairage UV (ICUV) pour l'application de lumière UV sur l'objet à mesurer, le canal d'éclairage UV (ICUV) comprenant un filtre dichroïque (46) reflétant la lumière UV et transparent pour la lumière visible, lequel est disposé dans le cheminement du rayonnement du canal de collecte (CC), incliné de préférence sous un angle de 45°, et reflète dans le cheminement du rayonnement du canal de collecte (CC) la lumière UV provenant d'une source lumineuse UV (40).

8. Dispositif de balayage suivant la revendication 7, **caractérisé en ce que** le canal d'éclairage UV (ICUV) comprend un diaphragme (42) qui est reproduit dans le plan de mesure par l'optique de reproduction (28) dans le canal de collecte (CC).

9. Dispositif de balayage suivant l'une des revendications précédentes, **caractérisé en ce que** la tête de mesure colorimétrique (MH) est équipée de deux ou plusieurs canaux d'éclairage (IC).

10. Dispositif de balayage suivant la revendication 9, **caractérisé en ce que** les diaphragmes (16) dans les deux canaux d'éclairage (IC) ou plus présentent au moins partiellement des formes et/ou des tailles différentes.

11. Dispositif de balayage suivant l'une des revendications 9 à 10, **caractérisé en ce que** deux canaux d'éclairage (IC) sont disposés décalés angulairement de 90° relativement au canal de collecte (CC), de sorte que l'objet à mesurer (S) est éclairé depuis deux directions spatiales décalées angulairement de 90° par rapport à la normale à l'objet à mesurer.

12. Dispositif de balayage suivant l'une des revendications 9 à 11, **caractérisé en ce que** quatre canaux d'éclairage (IC) sont prévus, lesquels sont disposés respectivement décalés angulairement de 90° l'un par rapport à l'autre relativement au canal de collecte (CC), de sorte que deux canaux d'éclairage (IC) se trouvent chaque fois diamétralement opposés.

13. Dispositif de balayage suivant la revendication 12, **caractérisé en ce que** le canal de collecte (CC) présente un filtre de polarisation (26) et **en ce que** deux canaux d'éclairage (IC) avoisinants, décalés angulairement de 90° l'un par rapport à l'autre, sont équipés chacun d'un filtre de polarisation (22) et **en ce que** les deux autres canaux d'éclairage (IC) avoisinants ne sont pas équipés d'un filtre de polarisation.

14. Dispositif de balayage suivant l'une des revendications précédentes, **caractérisé en ce que** la tête de mesure colorimétrique (MH) présente un canal de mesure de brillance (GC) qui est disposé diamétralement opposé au canal d'éclairage (IC) ou à un des canaux d'éclairage (IC) et collecte la lumière réfléchie par l'objet à mesurer (S).

15. Dispositif de balayage suivant la revendication 14, **caractérisé en ce que** le canal de mesure de brillance (GC) est formé essentiellement comme le canal d'éclairage (IC), la source lumineuse et l'optique de collimation étant manquantes et le diaphragme (16') étant réfléchissant et guidant la lumière de mesure via une deuxième optique de couplage (34') et un deuxième conducteur optique (LF2) dans un deuxième convertisseur (SP2) sélectif selon les longueurs d'onde.

16. Dispositif de balayage suivant l'une des revendications précédentes, **caractérisé par** une surface d'appui (MT) pour l'objet à mesurer (S), un mécanisme d'entraînement (D) pour le mouvement de la tête de mesure colorimétrique (MH) sur la surface d'appui (MT) selon au moins une dimension de celle-ci et pour le réglage de la hauteur de la tête de mesure colorimétrique (MH) dans la direction perpendiculaire à la surface d'appui ainsi que par une commande de mesure et d'entraînement (MDC) commandant le mécanisme d'entraînement (D) et collaborant avec la tête de mesure colorimétrique (MH).

17. Dispositif de balayage suivant la revendication 16, **caractérisé en ce qu'**il présente une régulation d'écartement (120) qui règle pour chaque point de mesure l'écartement de la tête de mesure colorimétrique (MH) au-dessus du lieu de mesure dans la direction perpendiculaire à la surface d'appui (MT) à une valeur de consigne d'écartement de mesure.

18. Dispositif de balayage suivant la revendication 17, **caractérisé en ce que** la régulation d'écartement (120) effectue une mesure de planéité de la surface d'appui (MT) et mémorise les valeurs de planéité (zP) ainsi déterminées et effectue le réglage d'écartement de la tête de mesure colorimétrique (MH) en tenant compte des valeurs de mesure de planéité mémorisées.

19. Dispositif de balayage suivant la revendication 18, **caractérisé en ce que** la régulation d'écartement (120) pour la mesure de planéité détermine dans une grille de points de mesure (P) répartis sur la surface d'appui (MT) les hauteurs de consigne (zP) de la tête de mesure colorimétrique (MH) au-dessus de ces points de mesure (P) et les mémorise comme valeurs de mesure de planéité (zP).

20. Dispositif de balayage suivant l'une des revendications 17 à 19, **caractérisé en ce que** la régulation d'écartement (120) effectue une mesure de l'épaisseur (DP) de l'objet à mesurer (S) et la mémorise et effectue le réglage d'écartement de la tête de mesure colorimétrique (MH) en tenant compte de l'épaisseur mémorisée de l'objet à mesurer.

21. Dispositif de balayage suivant la revendication 20, **caractérisé en ce que** la régulation d'écartement (120) pour la mesure de l'épaisseur (DP) de l'objet à mesurer (S) détermine la hauteur de consigne de la tête de mesure colorimétrique (MH) au-dessus d'un point de mesure sur l'objet à mesurer et la hauteur de consigne de la tête de mesure colorimétrique (MH) au-dessus d'un point situé en dessous de ce point de mesure sur la surface d'appui (MT) et mémorise la différence de ces deux hauteurs de consigne comme épaisseur (DP) de l'objet à mesurer.

22. Dispositif de balayage suivant l'une des revendications 17 à 21, **caractérisé en ce que** la régulation d'écartement (120) détermine la hauteur de consigne de la tête de mesure colorimétrique (MH) en un point de mesure à partir de valeurs mesurées avec la tête de mesure colorimétrique (MH) au point de mesure pour différents réglages de hauteur de celle-ci.

23. Dispositif de balayage suivant la revendication 17, **caractérisé en ce que** la régulation d'écartement (120) détermine comme hauteur de consigne de la tête de mesure colorimétrique (MH) en un point de mesure le réglage de la hauteur de la tête de mesure colorimétrique à proximité de laquelle les valeurs mesurées avec la tête de mesure colorimétrique varient le moins.

24. Dispositif de balayage suivant l'une des revendications 16 à 23, **caractérisé en ce qu'**il est équipé d'un système de régulation de la position d'une piste (110) pour la tête de mesure colorimétrique (MH), lequel détecte la position d'une piste à détecter, en particulier d'une gamme de contrôle, sur l'objet à mesurer (S) et guide la tête de mesure colorimétrique (MH) le long de cette piste.

25. Dispositif de balayage suivant l'une des revendications 16 à 24, **caractérisé en ce qu'**il est équipé d'un bloc blanc (WRK) calibré, stable à long terme et d'une bande de référence de blanc (WR) disposée sur la surface d'appui (MT) et **en ce que** la commande de mesure et d'entraînement (MDC) est conçue pour effectuer le calibrage du blanc du dispositif de balayage sur base de mesures de blanc sur la bande de référence de blanc (WR), ces mesures de blanc étant calibrés à l'aide de mesures de transfert effectuées préalablement sur le bloc blanc (WRK).

26. Dispositif de balayage suivant l'une des revendications 16 à 25, **caractérisé en ce qu'**il est équipé d'une bande de référence de blanc (WR) située sur la surface d'appui (MT) et **en ce que** la commande de mesure et d'entraînement (MDC) est conçue pour corriger par calcul des valeurs de blanc mesurées avec la tête de mesure colorimétrique (MH) à une distance différant de l'écartement de mesure de consigne correct de telle façon qu'elles correspondent aux valeurs de blanc mesurées à l'écartement de mesure de consigne correct.
